(19) **Europäisches Patentamt**
**European Patent Office**
**Office européen des brevets**

(11) **EP 1 963 687 B1**

(12) **EUROPÄISCHE PATENTSCHRIFT**

(45) Veröffentlichungstag und Bekanntmachung des Hinweises auf die Patenterteilung:
**15.06.2011 Patentblatt 2011/24**

(21) Anmeldenummer: **06849389.9**

(22) Anmeldetag: **19.12.2006**

(51) Int Cl.:
*F15B 21/14* (2006.01)    *F15B 1/02* (2006.01)
*B60T 1/10* (2006.01)    *B60K 6/12* (2006.01)
*F16H 61/40* (2010.01)

(86) Internationale Anmeldenummer:
**PCT/EP2006/012261**

(87) Internationale Veröffentlichungsnummer:
**WO 2007/101467 (13.09.2007 Gazette 2007/37)**

(54) **VERFAHREN ZUM STEUERN EINES HYDROSTATISCHEN ANTRIEBS**

METHOD OF CONTROLLING A HYDROSTATIC DRIVE

PROCEDE DE COMMANDE D'UN MECANISME D'ENTRAINEMENT HYDROSTATIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.12.2005 DE 102005061991**

(43) Veröffentlichungstag der Anmeldung:
**03.09.2008 Patentblatt 2008/36**

(73) Patentinhaber: **Bosch Rexroth AG**
**70184 Stuttgart (DE)**

(72) Erfinder:
• **MÜLLER, Matthias**
**86356 Neusäss (DE)**

• **SCHMUTTERMAIR, Peter**
**86459 Gessertshausen (DE)**

(74) Vertreter: **Körfer, Thomas**
**Mitscherlich & Partner**
**Patent- und Rechtsanwälte**
**Postfach 33 06 09**
**80066 München (DE)**

(56) Entgegenhaltungen:
**EP-A2- 1 433 648    AT-B- 395 960**
**DE-A1- 2 949 337**

EP 1 963 687 B1

**Beschreibung**

Die Erfindung betrifft ein Verfahren zum Steuern eines hydrostatischen Antriebs mit Rückgewinnung von gespeicherter- Energie gemäß dem Oberbegriffs des Anspruchs 1.

Ein solches Verfahren ist aus DE 29 49 337 bekannt.

Hydrostatische Antriebe werden häufig zum Antreiben von Nutzfahrzeugen verwendet. Dabei ist es möglich, über den hydrostatischen Antrieb einen Teil der kinetischen Energie während des Bremsvorgangs zu speichern und anschließend zurückzugewinnen. In der AT 395 960 B ist es vorgeschlagen, einen hydrostatischen Antrieb in einem geschlossenen Kreislauf mit einer zur Förderung in lediglich einer Richtung vorgesehenen Hydropumpe zu verwenden. Die förderseitige Arbeitsleitung, welche die Hydropumpe mit dem Hydromotor verbindet, ist mit einem Hochdruckspeicher verbunden. Es ist ein zweiter Speicher vorhanden, der als Niederdruckspeicher ausgebildet und mit der bezüglich der Hydropumpe saugseitigen Arbeitsleitung verbunden ist. Der Hochdruckspeicher sowie der Niederdruckspeicher sind permanent mit der förderseitigen bzw. der saugseitigen Arbeitsleitung verbunden. Während eines normalen Fahrbetriebs fördert die Hydropumpe in die förderseitige Arbeitsleitung. Der Hydromotor ist verstellbar und zum Fahren in einer ersten Richtung ausgeschwenkt. Gerät das Fahrzeug in einen Schiebebetrieb, so wird zunächst das Schluckvolumen des Hydromotors in Richtung Null verstellt. Um eine Bremswirkung zu erzielen, wird anschließend der Hydromotor in der entgegengesetzten Richtung ausgeschwenkt. In Folge dessen fördert der Hydromotor in die bezüglich der Hydropumpe förderseitige Arbeitsleitung.

Um das Einströmen von Druckmittel in die Hydropumpe entgegen der Förderrichtung der Hydropumpe zu verhindern, ist in der Arbeitsleitung ein Rückschlagventil vorgesehen. Das von dem Hydromotor geförderte Druckmittel wird dementsprechend in den Hochdruckspeicher gefördert. Damit wird unter Druckerhöhung des Drucks in dem Hochdruckspeicher die kinetische Energie des Fahrzeugs in Druckenergie umgewandelt. Der Volumenstromausgleich erfolgt durch Entnahme von Druckmittel aus dem Niederdruckspeicher.

Soll die gespeicherte Energie zurückgewonnen werden, so wird aus dem Hochdruckspeicher Druckmittel entnommen. Der Hydromotor ist wie im vorangegangenen Fahrbetrieb nun wieder in seiner ersten Richtung ausgeschwenkt. Beim Entspannen des Druckmittels über den Hydromotor wird durch den Hydromotor ein Abtriebsmoment erzeugt. Das durch den Hydromotor hindurch geförderte Druckmittel wird zum Volumenausgleich in den Niederdruckspeicher gefördert.

Bei dem bekannten Antrieb ist es nachteilig, dass zur Entnahme des Druckmittels der Hydromotor direkt aus dem Hochdruckspeicher mit dem Druckmittel beaufschlagt wird. Bei dem vorgeschlagenen Antrieb mit Rückgewinnung der kinetischen Energie muss- zudem der- Hydromotor über seine Neutrallage hinaus vergeschwenkt werden. Dabei wird die Strömungsrichtung in dem hydraulischen Kreislauf teilweise umgekehrt. Durch das direkte Zuführen des Druckmittels zu dem Hydromotor ist eine Momentenaddition durch Nutzung des Drucks in dem Hochdruckspeicher sowie dem Drehmoment eines die Hydropumpe antreibenden Motors nicht möglich.

Es ist eine Aufgabe der Erfindung, ein Verfahren zur Steuerung eines hydrostatischen Antriebs zu schaffen, bei dem gleichzeitig eine Rückgewinnung der gespeicherten Energie und eine Zuführung eines Antriebsmoments durch einen Antriebsmotor möglich ist.

Die Aufgabe wird durch das erfindungsgemäße Verfahren mit den Merkmalen des Anspruchs 1 gelöst.

Bei dem erfindungsgemäßen Verfahren zum Steuern eines hydrostatischen Antriebs ist eine Hydropumpe und ein

Hydromotor sowie ein erster und ein zweiter hydraulischer Speicher zur Speicherung und Rückgewinnung von Energie in einem geschlossenen Kreislauf eines hydrostatischen Antriebs miteinander verbunden. Erfindungsgemäß wird in dem ersten Speicher Druckenergie gespeichert. Zur Rückgewinnung dieser gespeicherten Energie wird der erste Speicher mit einer Saugseite der Hydropumpe verbunden. Zudem wird, um einen Volumenstromausgleich zu erreichen, der stromabwärtige Anschluss des Hydromotors mit dem zweiten Speicher verbunden. Durch die Verbindung des ersten Speichers, in dem beispielsweise während eines Bremsvorgangs kinetische Energie in Form von Druckenergie gespeichert wird, kann die Druckenergie dem Antrieb wieder zur Verfügung gestellt und damit zurückgewonnen werden. Dabei wird durch das unter Druck stehende, in dem ersten Speicher gespeicherte Druckmittel an der Saugseite der Hydropumpe eine Druckerhöhung bewirkt. Durch diese Druckerhöhung an der Saugseite der Hydropumpe ist die erforderliche Antriebsleistung eines primären Antriebsmotors, der die Hydropumpe antreibt, verringert. Die Druckdifferenz, welche normalerweise durch den Antriebsmotor allein erzeugt werden müsste, wird reduziert und damit die primär aufzuwendende Energie seitens des Antriebsmotors verringert. Zudem bietet diese Vorgehensweise auch den Vorteil, dass zum Antrieb des Hydromotors nicht nur die in dem ersten Speicher gespeicherte Druckenergie zur Verfügung steht, sondern dass zusätzlich ein Antriebsmoment des Antriebsmotors der Hydropumpe zugeführt werden kann. Es kommt zu einer Momentenaddition. An der Hydropumpe wird an der Förderseite ein Druck zur Verfügung gestellt, der auf den Hydromotor wirkt.

Dabei kann insbesondere auch bei sich leerendem Speicher ein ausreichender, für die Fahrsituation erforderlicher Druck zur Verfügung gestellt werden. In diesem Fall wird durch den Antriebsmotor das der Hydropumpe zugeführte Drehmoment entsprechend erhöht. Diese Momentenaddition führt zu einer erheblich flexibleren und situationsgerechteren Steuerung bei der Rückgewinnung von in dem ersten Speicher gespeicherter Druckenergie.

Erfindungsgemäß ist es vorgesehen, während der Rückgewinnung der Druckenergie die Hydropumpe mit einem Antriebsdrehmoment zu beaufschlagen. Durch das Sicherstellen eines solchen Antriebsdrehmoments, das seitens des in der Regel als Dieselbrennkraftmaschine ausgeführten Antriebsmotors erzeugt wird, wird sichergestellt, dass diese Dieselbrennkraftmaschine nicht in einen Schubbetrieb übergeht. Bei einem solchen Schubbetrieb würde unnötig Energie verschwendet werden. Der Schubbetrieb führt dazu, dass die vorhandene Druckenergie gegen das Stützelement des Dieselmotors arbeitet und dort in Wärme umgesetzt wird. Es wird daher stets während der Rückgewinnung der Druckenergie ein von Null verschiedenes Antriebsdrehmoment durch den Antriebsmotor erzeugt.

In den Unteransprüchen sind vorteilhafte Weiterbildungen des erfindungsgemäßen Verfahrens ausgeführt.

Vorzugsweise wird der stromabwärtige Anschluss des Hydromotors von der Saugseite der Pumpe zunächst getrennt und erst nach einem festgelegten ersten Zeitintervall der erste Speicher mit der Saugseite der Hydropumpe verbunden. Das festgelegte erste Zeitintervall bestimmt sich vorzugsweise nach dem dynamischen Verhalten der Ventile. Die zeitliche Abfolge beim Betätigen der Ventile zum Verbinden und Trennen der Leitungen in dem hydrostatischen Antrieb stellt sicher, dass das Verbinden des ersten Speichers mit der Saugseite der Hydropumpe nicht zu einem Druckstoß an dem stromabwärtigen Anschluss des Hydromotors führt.

Zur Festlegung des Schluckvolumens des Hydromotors während der Rückgewinnung von Energie wird zunächst ein Vorsteuerwert für ein Hydromotormoment ermittelt und auf Basis dieses abgeschätzten Vorsteuerwerts das Schluckvolumen des Hydromotors ermittelt und eingestellt. Der Vorsteuerwert wird dabei vorzugsweise unter Berücksichtigung von gemessenen Ist-Größen korrigiert. Damit kann zunächst ein Vorsteuerwert ermittelt werden, der aus einer Bedienervorgabe grob ermittelt wird. So wird aus einer Fahrhebelvorgabe eine beabsichtigte Geschwindigkeitsänderung ermittelt. Ein zur Erreichung dieser Geschwindigkeitsänderung erforderliches Moment, welches durch den hydrostatischen Antrieb erzeugt werden soll, wird daraufhin ermittelt. Aus diesem Moment lässt sich dann der zur Erzeugung des Moments erforderliche Schwenkwinkel bzw. das Schluckvolumen seitens des Hydromotors ermitteln.

Dieses Schluckvolumen bildet den Vorsteuerwert, wobei eine genauere Anpassung des einzustellenden Schluckvolumens des Hydromotors durch Berücksichtigung von in dem Antrieb gemessenen Ist-Größen korrigiert wird. Dem Vorsteuerwert wird eine Regelung überlagert.

Zur Ermittlung des Vorsteuerwerts wird eine Differenz aus einer Fahrzeugzielgeschwindigkeit und einer Fahrzeug-Ist-Geschwindigkeit ermittelt, sofern es sich bei dem hydrostatischen Antrieb um einen Fahrantrieb handelt.

Am Ende eines Rückgewinnungsvorgangs von gespeicherter Energie aus dem ersten Speicher wird zunächst der erste Speicher von der Saugseite der Hydropumpe abgetrennt und nach einem festgelegten zweiten Zeitintervall der stromabwärtige Anschluss der Hydromotors mit der Saugseite der Hydropumpe verbunden. Danach erst wird der stromabwärtige Anschluss des Hydromotors von dem zweiten Speicher abgetrennt. Diese spezielle Reihenfolge- beim Wechsel von einem regenerativen Fahrbetrieb mit Rückgewinnung von Energie und einem normalen hydrostatischen Fahrbetrieb stellt sicher, dass eine Zugkraftunterbrechung vermieden wird. Hierzu wird insbesondere zunächst der erste Speicher von der Saugseite der Hydropumpe abgetrennt und anschließend der stromabwärtige Anschluss des Hydromotors mit der Saugseite verbunden. Dadurch wird ein Druckanstieg am stromabwärtigen Anschluss des Hydromotors verhindert. Zudem bleibt zu diesem Zeitpunkt noch der zweite, als Niederdruckspeicher ausgebildete Speicher mit dem stromabwärtigen Anschluss des Hydromotors verbunden. Dadurch wird eine Dämpfung erreicht, so dass das Entstehen von Schwingungen beim Umschalten auf den normalen hydrostatischen Betrieb vermieden wird. Auch das zweite Zeitintervall wird im Wesentlichen durch die Ventildynamik bestimmt .

Beim Übergang zu einer sogenannten Speicherbremsung, also zu einem Bremsvorgang, bei dem durch den dann als Pumpe wirkenden Hydromotor Druckenergie in dem ersten Speicher gespeichert wird, ist es vorteilhaft, das Betätigen einer Bremseinrichtung zu erkennen und daraufhin das Speichern von Druckenergie einzuleiten. Dazu wird beim Betätigen einer Bremseinrichtung, beispielsweise einem Bremspedal eines Nutzfahrzeugs, zunächst das hydrostatische Getriebe bei konstantem Übersetzungsverhältnis auf ein geringeres Schluckvolumen bzw. ein geringeres Fördervolumen zurückgeschwenkt. Durch das Reduzieren des Schluckvolumens bzw. des Fördervolumens in gleichem Verhältnis, so dass das eingestellte Übersetzungsverhältnis konstant bleibt, wird ein ruckelfreier Übergang zwischen einem beschleunigten Fahrbetrieb und einem Bremsvorgang erreicht.

Gemäß einer weiteren bevorzugten Ausführungsform des erfindungsgemäßen Verfahrens wird bei Betätigen der Bremseinrichtung eine Förderseite der Hydropumpe und der zweite Speicher mit dem stromaufwärtigen Anschluss verbunden. Gleichzeitig wird bei betätigter Bremseinrichtung die Saugseite der Hydropumpe und der erste Speicher mit dem stromabwärtigen Anschluss des Hydromotors verbunden. Neben dem hydrostatischen Bremsen, durch das der erste Speicher aufgeladen wird, wird damit erreicht, dass parallel dazu der geschlossene hydraulische Kreislauf über die Hydropumpe mit Druckmittel versorgt wird. Diese Versorgung des geschlossenen hydrostatischen Kreislaufs mit Druckmittel stellt sicher, dass Nebenaggregate ebenfalls mit einem für sie erforderlichen Druck beaufschlagt werden können. Zudem kann das Stützmoment des Antriebsmotors zusätzlich zum Abbremsen verwendet werden. Dabei ist es insbesondere vorteilhaft, während des Speichervorgangs bei einem Bremsvorgang auf ein von Null verschiedenes Fördervolumen einzustellen.

Um das hydrostatische Abbremsen abhängig von einem Verzögerungswunsch eines Bedieners einzustellen, wird das Schluckvolumen des Hydromotors während der Speicherung der Energie bei einem Abbremsvorgang auf einen von dem Bremssignal der Bremseinrichtung und einem effektiven Druckdifferenzwert abhängigen Wert eingestellt. Dieser effektive Druckdifferenzwert berücksichtigt die Druckdifferenz zwischen dem ersten Speicher und dem zweiten Speicher sowie vorzugsweise einen Druckabfall durch das Leitungssystem des hydrostatischen Antriebs.

Vorzugsweise wird vor dem Erreichen des Stillstands des Hydromotors, also der Abtriebswelle des Hydromotors, der stromabwärtige Anschluss des Hydromotors von dem ersten Speicher und der stromaufwärtige Anschluss des Hydromotors von dem zweiten Speicher getrennt. Damit wird eine Reduzierung des Bremsmoments erreicht und ein sanftes Abbremsen bis zum Stillstand ist möglich. Zusätzlich wird vorzugsweise das Fördervolumen der Hydropumpe auf Null verstellt.

Gemäß einem weiteren bevorzugten Aspekt des Verfahrens wird zum Starten einer mit der Hydropumpe verbundenen Brennkraftmaschine der erste Speicher mit der Saugseite der Hydropumpe verbunden. Damit kann zum Anlassen beispielsweise der Dieselbrennkraftmaschine die mit der Dieselbrennkraftmaschine verbundene Hydropumpe aus dem ersten Speicher mit Druckmittel beaufschlagt werden. Die Hydropumpe wirkt dann als Hydromotor und erzeugt das erforderliche Drehmoment um den Antriebsmotor zu starten.

Weiterhin ist es bevorzugt, dass im Bedarfsfall zum Speichern von Druckenergie in dem ersten Speicher die Hydropumpe durch einen Antriebsmotor angetrieben wird und die Förderseite der Hydropumpe mit dem ersten Speicher verbunden ist. Damit ist es möglich, nicht nur während eines Bremsvorgangs Druckenergie in dem ersten Speicher zu speichern, sondern es kann auch unabhängig von einem Speicherbremsvorgang Druckenergie in dem ersten Speicher gespeichert werden. So kann beispielsweise vor dem Abstellen der Dieselbrennkraftmaschine der erste Speicher vollständig aufgeladen werden, so dass für einen anschließenden Startvorgang in jedem Fall ausreichend Druck in dem ersten Speicher zur Verfügung steht. Ferner ist es möglich, die Dieselbrennkraftmaschine beispielsweise im Bereich der Volllast zu betreiben, wenn der eigentliche hydrostatische Antrieb lediglich einen Teillastbetrieb der Dieselbrennkraftmaschine erfordern würde. In der Regel ist bei Brennkraftmaschinen im Bereich der Volllastkennlinie der Wirkungsgrad höher als im Teillastbereich.

Bevorzugte Ausgestaltungen des erfindungsgemäßen Verfahrens werden anhand der Zeichnung nachfolgend erläutert. Es zeigen:

Fig. 1    eine schematische Darstellung eines ersten Ausführungsbeispiels eines erfindungsgemäßen hydrostatischen Antriebs zur Durchführung des erfindungsgemäßen Verfahrens;

Fig. 2    eine schematische Darstellung eines zweiten Ausführungsbeispiels eines erfindungsgemäßen hydrostatischen Antriebs zur Durchführung des erfindungsgemäßen Verfahrens;

Fig. 3    eine schematische Darstellung eines dritten Ausführungsbeispiels eines erfindungsgemäßen hydrostatischen Antriebs zur Durchführung des erfindungsgemäßen Verfahrens; und

Fig. 4    eine schematische Darstellung der Zustände des Antriebs beim Ablauf des erfindungsgemäßen Verfahrens.

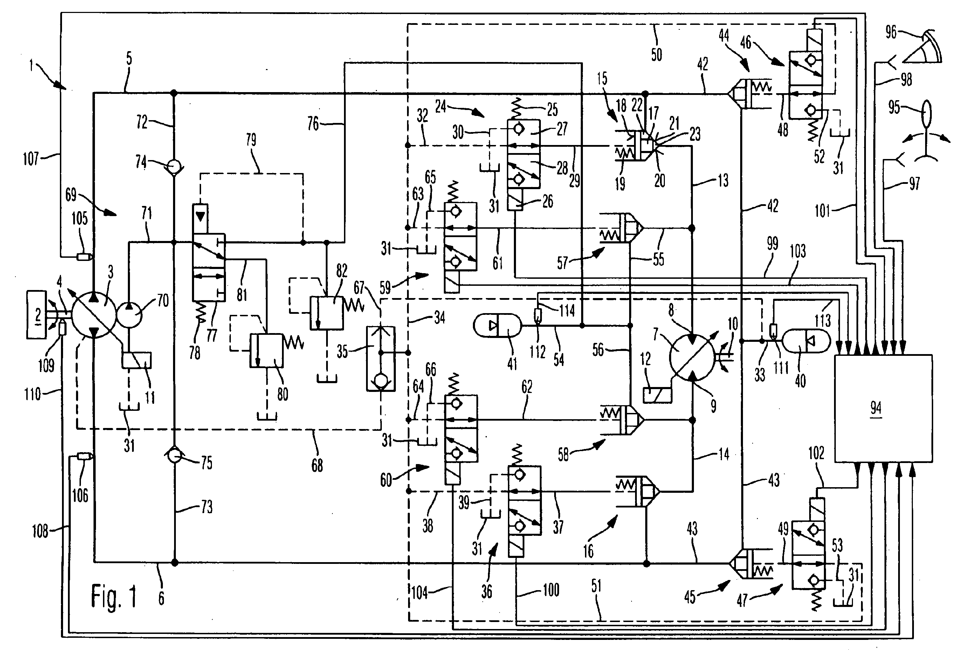

Die Fig. 1 zeigt eine schematische Darstellung eines erfindungsgemäßen hydrostatischen Antriebs 1. Der erfindungsgemäße hydrostatische Antrieb 1 kann beispielsweise ein Fahrantrieb eines Nutzfahrzeugs sein. Die Erfindung ist jedoch nicht auf Fahrantriebe beschränkt. Vielmehr sind sämtliche Antriebe in der erfindungsgemäßen Ausführung realisierbar, bei denen ein hydrostatisches Getriebe zum Einsatz kommt.

Der hydrostatische Antrieb 1 umfasst einen Antriebsmotor 2. Der Antriebsmotor 2 treibt eine Hydropumpe 3 über eine Antriebswelle 4 an. Die Hydropumpe 3 ist eine verstellbare hydrostatische Kolbenmaschine, welche zur Förderung in zwei Richtungen ausgelegt ist. Die Hydropumpe 3 fördert abhängig von der eingestellten Förderrichtung in eine erste Arbeitsleitung 5 oder eine zweite Arbeitsleitung 6. Mit der ersten Arbeitsleitung 5 und der zweiten Arbeitsleitung 6 ist ein Hydromotor 7 verbindbar. Der Hydromotor 7 weist einen ersten Arbeitsleitungsanschluss 8 und einen zweiten Arbeitsleitungsanschluss 9 auf. Der erste Arbeitsleitungsanschluss 8 ist mit der ersten Arbeitsleitung 5 verbindbar. Dementsprechend ist der zweite Arbeitsleitungsanschluss 9 mit der zweiten Arbeitsleitung 6 verbindbar. Sind der erste Arbeitsleitungsanschluss 8, wie es nachfolgend noch beschrieben wird, und der zweite Arbeitsleitungsanschluss 9 mit der ersten Arbeitsleitung 5 bzw. der zweiten Arbeitsleitung 6 verbunden, so sind die Hydropumpe 3 sowie der Hydromotor 7 in einem geschlossenen hydraulischen Kreislauf miteinander verbunden. Das bei Beaufschlagen des Hydromotors 7 durch den Hydromotor 7 erzeugte Abtriebsmoment wird durch eine Abtriebswelle 10 beispielsweise an eine Fahrzeugachse oder ein nachgeschaltetes Schaltgetriebe weitergeleitet.

Zur Einstellung des Fördervolumens der Hydropumpe 3 ist eine erste Verstellvorrichtung 11 vorgesehen. Dementsprechend wird das Schluckvolumen des Hydromotors 7 durch eine zweite Verstellvorrichtung 12 verstellt. Die erste Verstellvorrichtung 11 und die zweite Verstellvorrichtung 12 wirken auf jeweils einen Verstellmechanismus der Hydropumpe 3 bzw. des Hydromotors 7.

An dem ersten Arbeitsleitungsanschluss 8 des Hydromotors 7 ist eine erste Verbindungsleitung 13 angeschlossen. Der zweite Arbeitsleitungsanschluss 9 des Hydromotors 7 ist mit einer zweiten Verbindungsleitung 14 verbunden. Die erste Verbindungsleitung 13 ist über ein erstes Sitzventil 15 mit der ersten Arbeitsleitung 5 verbindbar. Die zweite Verbindungsleitung 14 ist über ein zweites Sitzventil 16 mit der zweiten Arbeitsleitung 6 verbindbar.

Sämtliche Sitzventile in dem in der Fig. 1 dargestellten hydrostatischen Kreislauf sind gleich aufgebaut. Der Übersichtlichkeit halber wird nachfolgend lediglich auf den Aufbau des ersten Sitzventils 15 im Detail eingegangen.

Das erste Sitzventil 15 weist einen Kolben 17 auf. Der Kolben 17 hat eine mit einem Druck beaufschlagbare Steuerfläche 18. Ebenfalls auf die Steuerfläche 18 wirkt die Kraft einer Schließfeder 19. Auf die Steuerfläche 18 wirken somit eine hydraulische Kraft durch einen Steuerdruck sowie die Kraft der Schließfeder 19 und beaufschlagen das erste sitzventil 15 in Schließrichtung. An dem Kolben 17 ist eine Dichtkante 20 ausgebildet, welche dichtend mit einem Dichtsitz 21 zusammenwirkt. In dem ersten Sitzventil 15 werden bei geschlossenem

Sitzventil 15 eine erste Kammer 22 und eine zweite Kammer 23 voneinander getrennt. In der ersten Kammer 22 und der zweiten Kammer 23 wirken der Druck der ersten Arbeitsleitung 5 bzw. der Druck der ersten Verbindungsleitung 13. Die in der ersten Kammer 22 und der zweiten Kammer 23 herrschenden Drücke beaufschlagen den Kolben 17 mit einer hydraulischen Kraft, welche in Öffnungsrichtung des ersten Sitzventils 15 wirkt. Wird die hydraulische Kraft auf die Steuerfläche 18 reduziert, so übersteigt die hydraulische Kraft in der ersten Kammer 22 und der zweiten Kammer 23 die Kraft der in Schließrichtung wirkenden Schließfeder 19 und das erste Sitzventil 15 wird in seine geöffnete Position gebracht. In der geöffneten Position des ersten Sitzventils 15 sind die erste Kammer 22 und die zweite Kammer 23 miteinander verbunden, so dass eine durchströmbare Verbindung zwischen der ersten Arbeitsleitung 5 und der ersten Verbindungsleitung 13 hergestellt ist. Bei geöffnetem ersten Sitzventil 15 wird somit bei einer Förderung von Druckmittel durch die Hydropumpe 3 in die erste Arbeitsleitung 5 der erste Arbeitsleitungsanschluss 8 des Hydromotors 7 mit Druckmittel beaufschlagt.

Um den auf die Steuerfläche 18 des ersten Sitzventils 15 wirkenden Steuerdruck zu beeinflussen, ist ein erstes Pilotventil 24 vorgesehen. Das erste Pilotventil 24 ist ein 3/2-Wegeventil und wird durch eine Ventilfeder 25 in einer ersten Richtung mit einer Kraft beaufschlagt. In entgegengesetzter Richtung wirkt die Kraft eines Elektromagneten 26. Anstelle des Elektromagneten 26 ist auch ein anderer Aktuator verwendbar. Ebenso ist es möglich, entgegengesetzt zu der Kraft der Ventilfeder 25 eine hydraulische Kraft auf das erste Pilotventil 24 wirken zu lassen. In Abhängigkeit von dem Kräfteverhältnis der Ventilfeder 25 und des Elektromagneten 26 wird das erste Pilotventil 24 in seine erste Schaltposition 27 oder in seine zweite Schaltposition 28 gebracht. Die Ventilfeder 25 beaufschlagt das erste Pilotventil 24 dabei in Richtung seiner ersten Schaltposition 27. In der ersten Schaltposition 27 verbindet das erste Pilotventil 25 eine erste Steuerdruckleitung 29 mit einem ersten Druckzuführungsleitungszweig 32.

Der in dem ersten Druckzuführungsleitungszweig 32 herrschende Druck wird somit in der ersten Schaltposition 27 des ersten Pilotventils 24 über die damit verbundene erste Steuerdruckleitung 29 der Steuerfläche 18 des ersten Sitzventils 15 zugeführt. Befindet sich folglich das erste Pilotventil 24 in der durch die Ventilfeder 25 vorgegebenen ersten Schaltposition 27, so wird das erste Sitzventil 15 in Schließrichtung beaufschlagt. Wird dagegen der Elektromagnet 26 mit einem Steuersignal beaufschlagt, so wirkt auf das erste Pilotventil 24 durch den Elektromagneten 26 eine Kraft, die das erste Pilotventil 24 entgegen der Kraft der Ventilfeder 25 in seine zweite Schaltposition 28 bringt. In der zweiten Schaltposition 28 ist die erste Steuerdruckleitung 29 mit einer ersten Entspannungsleitung 30 verbunden. Ober die erste Entspannungsleitung 30 wird der in der ersten Steuerdruckleitung 29 herrschende Druck in ein Tankvolumen 31 entspannt. Dementsprechend nimmt die hydraulische Kraft, welche auf die Steuerfläche 18 des ersten Sitzventils 15 wirkt, ab und das erste Sitzventil 15 wird durch die hydraulische Kraft in der ersten Kammer 22 sowie in der zweiten Kammer 23 in seine geöffnete Position gebracht. Durch Bestromen des Elektromagneten 26 wird somit eine Verbindung zwischen der ersten Arbeitsleitung 5 und dem ersten Arbeitsleitungsanschluss 8 hergestellt.

Der zur Erzeugung der Steuerkraft auf die Steuerfläche 18 erforderliche Druck wird über den ersten Druckzuführungsleitungszweig 32 und das erste Pilotventil 24 zugeführt. Der erste Druckzuführungsleitungszweig 32 ist hierzu mit einer Druckzuführungsleitung 34 verbunden. Die Druckzuführungsleitung 34 ist mit einem Ausgang eines Wechselventils 35 verbunden. Durch das Wechselventil 35 wird in nachfolgend noch beschriebener Weise jeweils der höchste in dem System verfügbare Druck bereitgestellt.

Zur Ansteuerung des zweiten Sitzventils 16 ist ein zweites Pilotventil 36 vorgesehen. Das zweite Pilotventil 36 ist vergleichbar mit dem ersten Pilotventil 24 aufgebaut. Auf eine erneute Beschreibung wird der Übersichtlichkeit halber verzichtet. Durch das zweite Pilotventil 36 ist eine zweite Steuerdruckleitung 27 mit einem zweiten Druckzuführungsleitungszweig 38 verbindbar. Das zweite Pilotventil 36 wird ebenfalls durch eine Feder in dieser Stellung gehalten. Wird das zweite Pilotventil 36 mit einem Steuersignal an einem Elektromagneten beaufschlagt, so wird es in seine zweite Schaltposition gebracht, in der die zweite Steuerdruckleitung 37 mit einer zweiten Entspannungsleitung 39 verbunden ist. Bei Beaufschlagen des zweiten Pilotventils 36 mit einem Steuersignal wird folglich der auf die Steuerfläche des zweiten Sitzventils 16 wirkende Steuerdruck reduziert, indem die zweite Steuerdruckleitung 37 in das Tankvolumen 31 entspannt wird. Infolge dessen wird das zweite Sitzventil 16 bei Anliegen eines Steuersignals an dem Pilotventil 36 in seine geöffnete Position gebracht. In der geöffneten Position des zweiten Sitzventils 16 sind die zweite Verbindungsleitung 14 und die zweite Arbeitsleitung 6 miteinander verbunden.

Während eines normalen Fahrbetriebs sind sowohl das erste Pilotventil 24 als auch das zweite Pilotventil 36 mit einem Steuersignal beaufschlagt. Die erste Steuerdruckleitung 29 und die zweite Steuerdruckleitung 37 werden folglich in das Tankvolumen 31 entspannt und das erste Sitzventil 15 und das zweite Sitzventil 16 in ihre jeweilige offene Position gebracht. Damit wird ein geschlossener hydraulischer Kreislauf ausgebildet, indem in an sich bekannter Weise die Hydropumpe 3 und der Hydromotor 7 als hydrostatisches Getriebe angeordnet sind. Das Übersetzungsverhältnis des hydrostatischen Getriebes wird durch das Einstellen des Fördervolumens der Hydropumpe 3 bzw. des Schluckvolumens des Hydromotors 7 mittels der ersten Verstellvorrichtung 11 bzw. der zweiten Verstellvorrichtung 12 eingestellt.

Der erfindungsgemäße hydrostatische Antrieb 1 umfasst weiterhin einen ersten Speicher 40 und einen zweiten Speicher 41. Der erste Speicher 40 ist als Hochdruckspeicher ausgeführt. Der zweite Speicher 41 ist als Niederdruckspeicher ausgebildet. Vorzugsweise sind beide Speicher 40, 41 als hydropneumatische Speicher ausgebildet, in denen eine kompressibles Volumen bei Zuführung von Druckmittel komprimiert wird.

Der erste Speicher 40 ist über eine Hochdruckspeicherleitung 33 mit dem hydrostatischen Kreislauf verbindbar. Die Hochdruckspeicherleitung 33 verzweigt sich in einen ersten Hochdruckspeicherleitungszweig 42 und einen zweiten Hochdrucksspeicherleitungszweig 43. In dem ersten Hochdrucksspeicherleitungszweig 42 ist ein drittes Sitzventil 44 angeordnet. In dem zweiten Hochdrucksspeicherleitungszweig 43 ist ein viertes Sitzventil 45 angeordnet. Das dritte Sitzventil 44 und das vierte Sitzventil 45 sind ebenfalls jeweils mit dem Steuerdruck über eine dritte Steuerdruckleitung 48 bzw. eine vierte Steuerdruckleitung 49 in Schließrichtung beaufschlagbar. Ebenfalls in Schließrichtung wirkt auf das dritte Sitzventil 44 und das vierte Sitzventil 45 jeweils eine Schließfeder.

Befindet sich das dritte Sitzventil 44 in seiner geschlossenen Position, so ist der erste Hochdrucksspeicherleitungszweig 42 unterbrochen. Befindet sich das vierte Sitzventil 45 in seiner geschlossenen Position, so ist der zweite Hochdrucksspeicherleitungszweig 43 unterbrochen.

Der erste Hochdrucksspeicherleitungszweig 42 mündet in die erste Arbeitsleitung 5 aus. Entsprechend mündet der zweite Hochdrucksspeicherleitungszweig 43 in die zweite Arbeitsleitung 6 aus. Befinden sich das dritte Sitzventil 44 und das vierte Sitzventil 45 in ihrer jeweils geschlossenen Position, ist somit keine durchströmbare Verbindung von der ersten Arbeitsleitung 5 zu dem ersten Speicher 40 und auch keine Verbindung von der zweiten Arbeitsleitung 6 zu dem ersten Speicher 40 vorhanden.

Die dritte Steuerdruckleitung 48 ist in einer ersten Schaltposition eines dritten Pilotventils 46 mit einem dritten Druckzuführungsleitungszweig 50 verbunden. Das dritte Pilotventil 46 wird in Richtung dieser Schaltposition mit einer Ventilfeder beaufschlagt. In entgegengesetzter Richtung wirkt wiederum ein Elektromagnet, der das dritte Pilotventil 46 in bereits beschriebener Weise mit einer Kraft entgegen der Kraft der Ventilfeder beaufschlagen kann. Wird der Elektromagnet mit einem Steuersignal beaufschlagt, so bringt er das dritte Pilotventil 46 in seiner zweite Schaltposition. Die dritte Steuerdruckleitung 48 wird mit einer dritten Entspannungsleitung 52 in dieser Position verbunden, so dass die dritte Steuerdruckleitung 48 in das Tankvolumen 31 entspannt wird. Infolge dessen wird das dritte Sitzventil 44 durch den in dem ersten Hochdruckspeicherleitungszweig 42 herrschenden Druck in seine geöffnete Position gebracht. In der geöffneten Position des dritten Sitzventils 44 ist die erste Arbeitsleitung 5 über den ersten Hochdruckspeicherleitungszweig 42 und die Hochdruckspeicherleitung 33 mit dem ersten Speicher 40 verbunden.

Entsprechend der zuvor beschriebenen Anordnung ist auch das vierte Sitzventil 45 durch ein viertes Pilotventil 47 ansteuerbar. Eine vierte Steuerdruckleitung 49 ist über das vierte Pilotventil 47 entweder mit einem vierten Druckzuführungsleitungszweig 51 oder mit einer vierten Entspannungsleitung 53 verbindbar. In der Ruheposition des vierten Pilotventils 47 verbindet das vierte Pilotventil 47 die vierte Steuerdruckleitung 49 mit dem vierten Druckzuführungsleitungszweig 51. Bei Beaufschlagen eines Elektromagneten wird das vierte Pilotventil 47 in seine zweite Schaltposition verstellt, in der die vierte Steuerdruckleitung 49 mit der vierten Entspannungsleitung 53 verbunden ist. In bereits beschriebener Weise führt dies zu einer Öffnung des vierten Sitzventils 45. In der geöffneten Position des Sitzventils 45 ist die zweite Arbeitsleitung 6 mit dem ersten Speicher 40 über den zweiten Hochdruckspeicherleitungszweig 43 verbunden.

Der zweite Speicher 41 ist als Niederdruckspeicher ausgeführt und über eine Niederdruckspeicherleitung 54 mit dem hydraulischen Kreislauf verbindbar. Die Niederdruckspeicherleitung 54 verzweigt sich in einen ersten Niederdruckspeicherleitungszweig 55 und einen zweiten Niederdruckspeicherleitungszweig 56. In dem ersten Niederdruckspeicherleitungszweig 55 ist ein fünftes Sitzventil 57 angeordnet. In dem zweiten Niederdruckspeicherleitungszweig 56 ist ein sechstes Sitzventil 58 angeordnet. Der erste Niederdruckspeicherleitungszweig 55 mündet in der ersten Verbindungsleitung 13 aus. Der zweite Niederdruckspeicherleitungszweig 56 mündet in der zweiten Verbindungsleitung 14 aus. Damit ist in der geschlossenen Position des fünften Sitzventils 57 die Verbindung zwischen der ersten Verbindungsleitung 13 und der Niederdruckspeicherleitung 54 unterbrochen. Ebenso unterbricht das sechste Sitzventil 58 die Verbindung zwischen der zweiten Verbindungsleitung 14 und der Niederdruckspeicherleitung 54.

Das fünfte Sitzventil 57 wird durch ein fünftes Pilotventil 59 angesteuert. Um das fünfte Sitzventil 57 in Schließrichtung mit einer hydraulischen Kraft zu beaufschlagen, verbindet das fünfte Pilotventil 59 eine fünfte Steuerdruckleitung 61 mit einem fünften Druckzuführungsleitungszweig 63. Wird dagegen das fünfte Pilotventil 59 an einem Elektromagneten mit einer Steuerkraft beaufschlagt, so wird entgegen der Kraft seiner Ventilfeder das fünfte Pilotventil 59 in seine zweite Schaltposition gebracht, in der die fünfte Steuerdruckleitung 51 mit einer fünften Entspannungsleitung 65 verbunden ist. Als Folge der Entspannung des in der fünften Steuerdruckleitung 61 herrschenden Drucks in das Tankvolumen 31 öffnet das fünfte Sitzventil 57 und die erste Verbindungsleitung 13 wird über den ersten Niederdruckspeicherleitungszweig 55 mit der Niederdruckspeicherleitung 54 und somit mit dem zweiten Speicher 41 verbunden.

In entsprechender Weise wird das sechste Sitzventil 58 durch ein sechstes Pilotventil 60 angesteuert. In seiner Ruheposition, die wiederum durch eine Ventilfeder definiert ist-, wird eine sechste Steuerdruckleitung 62 durch das sechste Pilotventil 60 mit einem sechsten Druckzuführungsleitungszweig 64 verbunden.

Wird dagegen das sechste Pilotventil 60 mit einem Steuersignal beaufschlagt, so wird es durch seinen Elektromagneten entgegen der Kraft der Ventilfeder in seine andere Endposition gebracht. In dieser Endposition ist die sechste Steuerdruckleitung 62 mit einer sechsten Entspannungsleitung 66 verbunden. Das aus der sechsten Steuerdruckleitung 62 über die sechste Entspannungsleitung 60 in das Tankvolumen 31 entweichende Druckmittel führt zu einer Reduzierung der Steuerkraft an dem sechsten Sitzventil 58. Durch die Reduzierung der Steuerkraft, die das sechste Sitzventil 58 in seine Schließrichtung beaufschlagt, kommt es zu einem Übergewicht der in entgegengesetzter Richtung wirkenden Kräfte, die durch die in dem zweiten Niederdruckspeicherleitungszweig 56 wirkenden Drücke erzeugt wird. Infolge dessen wird das sechste Sitzventil 58 in seine geöffnete Position gebracht, in der eine durchströmbare Verbindung in dem zweiten Niederdruckspeicherleitungszweig 56 existiert.

Der erste bis sechste Druckzuführungsleitungszweig 32, 38, 50, 51, 63 und 64 sind mit einer Druckzuführungsleitung 34 verbunden. Die Druckzuführungsleitung 34 ist mit einem Ausgang des Wechselventils 35 verbunden. An den beiden Eingängen des Wechselventils 35 mündet eine Speicherverbindungsleitung 67 bzw. eine Pumpenverbindungsleitung 68 aus. Über die Speicherverbindungsleitung 67 wird der Eingang des Wechselventils 35 mit dem in der Hochdruckspeicherleitung 33 und damit mit dem in dem ersten Speicher 40 herrschenden Druck beaufschlagt. An dem anderen Eingang des Wechselventils 35 wirkt über die Pumpenverbindungsleitung 68 jeweils der höhere der Drücke der ersten bzw. zweiten Arbeitsleitung 5, 6. Damit wird durch das Wechselventil 35 an dessen Ausgang jeweils der höchste in dem System zur Verfügung stehende Druck zur Ansteuerung der Sitzventile 15, 16, 44, 45, 57, 58 zur Verfügung gestellt.

Der hydrostatische Antrieb 1 umfasst weiterhin eine Speiseeinrichtung 69. Die Speiseeinrichtung 69 weist eine Speisepumpe 70 auf. Die Speisepumpe 70 ist zur Förderung in lediglich einer Richtung vorgesehen und vorzugsweise als Konstantpumpe ausgeführt. Die Speisepumpe 70 ist gemeinsam mit der verstellbaren Hydropumpe 3 auf der Antriebswelle 4 angeordnet und wird somit über den Antriebsmotor 2 angetrieben. Die Speisepumpe 70 saugt aus dem Tankvolumen 31 Druckmittel an und fördert es in eine Speiseleitung 71. Die Speiseleitung 71 verzweigt sich in einen mit der ersten Arbeitsleitung 5 verbundenen ersten Speiseleitungszweig 72 und einen mit der zweiten Arbeitsleitung 6 verbundenen zweiten Speiseleitungszweig 73. In dem ersten Speiseleitungszweig 72 ist ein erstes Rückschlagventil 74 vorgesehen. In dem zweiten Speiseleitungszweig 73 ist ein zweites Rückschlagventil 75 vorgesehen. Die beiden Rückschlagventile 74 bzw. 75 sind so angeordnet, dass sie in Richtung auf die erste Arbeitsleitung 5 bzw. die zweite Arbeitsleitung 6 hin öffnen, sofern der Druck in der Speiseleitung 71 größer ist als der jeweilige Arbeitsleitungsdruck in der ersten Arbeitsleitung 5 bzw. der zweiten Arbeitsleitung 6.

Zur Absicherung des hydrostatischen Antriebs 1 kann in Ergänzung zu dem ersten Rückschlagventil 74 sowie zu dem zweiten Rückschlagventil 75 jeweils parallel ein Druckbegrenzungsventil angeordnet sein, welches die jeweilige Arbeitsleitung 5, 6 bei Entstehen eines kritisch hohen Drucks in Richtung der Speiseleitung 71 entspannt.

Die Speiseeinrichtung 69 ist über eine Druckhalteleitung 76 mit dem zweiten Speicher 41 verbindbar. Hierzu verbindet die Druckhalteleitung 76 einen Ausgang eines Schaltventils 77 mit der Niederdruckspeicherleitung 54. Das Schaltventil 77 befindet sich in Abhängigkeit von der Kraft einer Druckfeder 78 und einer entgegengesetzt wirkenden hydraulischen Kraft in einer ersten oder einer zweiten Schaltposition. Ist die hydraulische Kraft größer als die Kraft der Druckfeder 78, so verbindet das Schaltventil 77 die Speiseleitung 71 mit einer Ablaufleitung 81. Die Ablaufleitung 81 ist über ein erstes Druckbegrenzungsventil 80 mit dem Tankvolumen 31 verbindbar. Unterschreitet die hydraulische Kraft an dem Schaltventil 77 die Kraft der Druckfeder 78, so verschiebt die Druckfeder 78 das Schaltventil 77 in seine andere Schaltposition, in der die Speiseleitung 71 mit der Druckhalteleitung 76 verbunden ist.

Durch die Vergleichsleitung 79 wird der Druck der Druckhalteleitung 76 der Messfläche zugeführt. Somit schaltet in Abhängigkeit von dem in dem zweiten Speicher 41 herrschenden Druck das Schaltventil 77 in seine erste bzw. zweite Schaltposition. Die Druckhalteleitung 76 ist über ein zweites Druckbegrenzungsventil 82 mit dem Tankvolumen 31 verbindbar.

Sobald der Druck in dem zweiten Speicher 41 unter einen durch die Druckfeder 78 eingestellten Wert sinkt, wird das Schaltventil 77 in eine Schaltposition gebracht, in der die Speiseleitung 71 mit der Druckhalteleitung 76 verbunden ist. In dieser Schaltposition wird durch die Speisepumpe 70 Druckmittel in den zweiten Speicher 41 gefördert. Infolge dessen steigt der Druck in dem zweiten Speicher 41 an, bis ein ausreichender Druck erreicht ist und infolge dessen die auf das Schaltventil 77 wirkende hydraulische Kraft das Schaltventil 77 in seine entgegengesetzte Schaltposition bringt. In dieser entgegengesetzten Schaltposition wird der in der Speiseeinrichtung 69 herrschende Druck durch das Druckbegrenzungsventil 80 begrenzt. Vorzugsweise ist das erste Druckbegrenzungsventil 80 beispielsweise auf 20bar eingestellt. Das zweite Druckbegrenzungsventil 82 ist dagegen auf einen höheren Druck, beispielsweise 40bar eingestellt, der dem Schaltdruck des Schaltventils 77 entspricht.

Mit Hilfe der Verbindung von der Speiseeinrichtung 69 zu dem zweiten Speicher 41 ist somit gewährleistet, dass durch Leckage während eines regenerativen Betriebs des hydrostatischen Antriebs 1 aus dem Kreislauf entweichendes Druckmittel wieder zugeführt wird.

Wie es bereits einleitend ausgeführt wurde, ist während eines normalen Fahrbetriebs ein geschlossener hydraulischer Kreislauf vorgesehen, in dem die Hydropumpe 3 und der Hydromotor 7 angeordnet sind. Hierzu sind das erste Pilotventil 24 und das zweite Pilotventil 36 mit einem Steuersignal beaufschlagt. Das erste Sitzventil 15 und das zweite Sitzventil 16 befinden sich in ihrer geöffneten Position und der geschlossene hydraulische Kreislauf besteht aus der ersten Arbeitsleitung 5, der ersten Verbindungsleitung 13, der zweiten Verbindungsleitung 14 und der zweiten Arbeitsleitung 6. Für die nachfolgende Beschreibung wird angekommen, dass eine Vorwärtsfahrt ein Fördern von Druckmittel durch die Hydropumpe 3 in die erste Arbeitsleitung 5 bedeutet. Dementsprechend ist die erste Arbeitsleitung 5 bei Vorwärtsfahrt die förderseitige Arbeitsleitung und die zweite Arbeitsleitung 6 die saugseitige Arbeitsleitung. Ausgehend von einer Vorwärtsfahrt soll zunächst das betrachtete Fahrzeug in Schiebebetrieb geraten bzw. abgebremst werden. Im Schiebebetrieb wird der erste Speicher 40 zum Speichern der kinetischen Energie des Fahrzeugs eingesetzt. In den ersten Speicher 40 ist daher Druckmittel durch den nun als Pumpe wirkenden Hydromotor 7 zu fördern. Während des Bremsvorgangs wird Druckmittel aus dem zweiten Speicher 41 entnommen und durch den Hydromotor 7 in den ersten Speicher 40 gepumpt. Hierzu ist im Falle der beschriebenen Vorwärtsfahrt das fünfte Pilotventil 59 mit einem Steuersignal beaufschlagt. Infolge dessen ist das fünfte Sitzventil 57 in seiner geöffneten Position und Druckmittel kann aus dem zweiten Speicher 41 über den ersten Niederdruckspeicherleitungszweig 55 durch den Hydromotor 7 an dessen erstem Arbeitsleitungsanschluss 8 angesaugt werden. Das durch den Hydromotor 7 aus dem zweiten Speicher 41 angesaugte Druckmittel wird durch den Hydromotor 7 in die zweite Verbindungsleitung 14 gefördert.

Das zweite Pilotventil 36 ist ebenfalls mit einem Steuersignal beaufschlagt, so dass sich das zweite Sitzventil 16 ebenfalls in seiner geöffneten Position befindet. Weiterhin ist das vierte Pilotventil 47 mit einem Steuersignal beaufschlagt und das vierte Sitzventil 45 wird durch den Druck des zweiten Hochdruckspeicherleitungszweigs 43 ebenfalls in seine geöffnete Position gebracht. Die übrigen Pilotventile 46, 24 und 60 werden dagegen nur durch ihre jeweiligen Ventilfedern beaufschlagt und die zugeordneten Sitzventile 44, 15 und 58 befinden sich in ihrer geschlossenen Position.

Das durch den Hydromotor 7 geförderte Druckmittel wird folglich über die zweite Verbindungsleitung 14 in Richtung auf die zweite Arbeitsleitung 6 hin und weiter über den zweiten Hochdruckspeicherleitungszweig 43 in den ersten Speicher 40 gefördert.

Nach einem solchen Bremsvorgang ist in dem ersten Speicher 40 Druckmittel unter hohem Druck gespeichert. Die gespeicherte Druckenergie entsteht dabei durch den Abbau der kinetischen Energie des Fahrzeugs. Soll nach einem solchermaßen beschriebenen Bremsvorgang während Vorwärtsfahrt erneut in Vorwärtsfahrtsrichtung beschleunigt werden, so muss das Druckmittel aus dem ersten Speicher 40 in geeigneter Weise dem hydrostatischen Antrieb 1 zugeführt werden. Erfindungsgemäß erfolgt die Entnahme des Druckmittels aus dem ersten Speicher 40 in die jeweils saugseitige Arbeitsleitung, also auf der Saugseite der Hydropumpe 3. Die saugseitige Arbeitsleitung ist im Falle einer Vorwärtsfahrt die zweite Arbeitsleitung 6. Zur Entnahme von Druckmittel und dementsprechend zur Rückgewinnung von Energie wird das vierte Pilotventil 47 mit einem Steuersignal beaufschlagt. Das vierte Sitzventil 45 wird in die geöffnete Position gebracht und das Druckmittel aus dem ersten Speicher 40 wird der zweiten Arbeitsleitung 6 und damit der Saugseite der Hydropumpe 3 zugeführt. Die Hydropumpe 3 saugt somit aus der unter einem Vordruck stehenden zweiten Arbeitsleitung 6 an und kann zusätzlich mit dem Drehmoment des Antriebsmotors 2 beaufschlagt werden. Dies führt zu einer Addition der Momente und der Antriebsmotor 2 kann mit geringerer Leistung betrieben werden. Eine Kraftstoffeinsparung ist die Folge. Mit dem Arbeitsleitungsdruck in der ersten Arbeitsleitung 5 wird der Hydromotor 7 beaufschlagt. Hierzu wird das erste Pilotventil 24 mit einem Steuersignal beaufschlagt, so dass sich das erste Sitzventil 15 in seiner geöffneten Position befindet. Der erste Arbeitsleitungsanschluss 8 des Hydromotors 7 ist somit mit der förderseitigen Arbeitsleitung 5 verbunden. Das aus dem Hydromotor 7 stromabwärts an dem zweiten Arbeitsleitungsanschluss 9 austretende Druckmittel wird unter Erzeugung eines Abtriebsdrehmoments an der Abtriebswelle 10 entspannt und wird über das geöffnete sechste Sitzventil 58 in den zweiten Speicher 41 gefördert. Zum Öffnen des sechsten Sitzventils 58 wird das sechste Pilotventil 60 mit einem Steuersignal beaufschlagt. Die übrigen Sitzventile (16, 44 und 57) sind jeweils in ihrer geschlossenen Position, in dem die zugeordneten Pilotventile (36, 46 und 59) nicht mit einem Steuersignal beaufschlagt sind.

In entsprechender Weise ist sowohl die Speicherung der kinetischen Energie als auch die Rückgewinnung der kinetischen Energie bei Rückwärtsfahrt möglich. Eine Rückwärtsfahrt führt zu einer Umkehrung der saug- und förderseitigen Arbeitsleitung bezüglich der Hydropumpe 3. Dementsprechend ist ausgehend von dem vorstehend beschriebenen Beispiel bei Rückwärtsfahrt die zweite Arbeitsleitung 6 die förderseitige Arbeitsleitung bezüglich der Hydropumpe 3 und die erste Arbeitsleitung 5 wird zur saugseitigen Arbeitsleitung bezüglich der Hydropumpe 3. Folglich ändert sich

EP 1 963 687 B1

auch die Strömungsrichtung durch den Hydromotor 7, so dass bei Rückwärtsfahrt der erste Arbeitsleitungsanschluss 8 des Hydromotors 7 der stromabwärtige Arbeitsleitungsanschluss und der zweite Arbeitsleitungsanschluss 9 der stromaufwärtige Arbeitsleitungsanschluss des Hydromotors 7 ist. Um die jeweiligen Schaltzustände noch einmal übersichtlich darzustellen, sind für Vorwärts- und Rückwärtsfahrt sowohl ein Beschleunigungsvorgang als auch ein Bremsvorgang in der nachfolgenden Tabelle dargestellt. Der Einfachheit halber werden lediglich die mit einem Steuersignal beaufschlagten Pilotventile angegeben. Dies bedeutet, dass die übrigen Pilotventile jeweils kein Steuersignal erhalten und die Ihnen zugeordneten Sitzventile sich in der geschlossenen Position befinden.

|  | Bestromt (Pilotventil) | Offen (Sitzventil) |
| --- | --- | --- |
| Vorwärts beschleunigen | 24, 47, 60 | 15, 45, 58 |
| Vorwärts bremsen | 36, 47, 59 | 16, 45, 57 |
| Rückwärts beschleunigen | 36, 46, 59 | 16, 44, 57 |
| Rückwärts bremsen | 24, 46, 60 | 15, 44, 58 |

Bei einer Bedienung des Fahrhebels werden die Pilotventile 24, 36, 46, 47 sowie 59 und 60 durch ein elektronisches Steuergerät 94 angesteuert. Das elektronische Steuergerät 94 ermittelt ausgehend von einem durch den Bediener vorgegebenen Fahrwunsch die Schaltzustände der einzelnen Pilotventile 24, 36, 46, 47, 59 und 60 für den dem Fahrwunsch entsprechenden Betriebszustand des Antriebs.

Der Bediener gibt seinen Fahrwunsch über einen Fahrhebel 95 und eine Bremseinrichtung, beispielsweise ein Bremspedal 96, vor. Die Signale des Fahrhebels 95 bzw. des Bremspedals 96 werden über eine erste Signalleitung 97 bzw. eine zweite Signalleitung 98 an das elektronische Steuergerät 94 übermittelt. Aufgrund der Einstellung der Position des Fahrhebels 95 und des Bremspedals 96 ermittelt das elektronische Steuergerät 94 den Fahrzustand des über den hydrostatischen Antrieb 1 angetriebenen Fahrzeugs. In entsprechender Weise werden nach obenstehender Tabelle die Pilotventile angesteuert, um die Fahrzustände "vorwärts Beschleunigen", "vorwärts Bremsen", "rückwärts Beschleunigen" bzw. "rückwärts Bremsen" einzustellen.

Zur Ansteuerung der Pilotventile ist das elektronische Steuergerät 94 über erste bis sechste Steuerleitungen 99 bis 104 mit den Elektromagneten der Pilotventile 24, 36, 46, 47, 59 und 60 verbunden. Ferner werden dem elektronischen Steuergerät 94 Informationen über den saugseitig bzw. förderseitig in der ersten Arbeitsleitung 5 bzw. der zweiten Arbeitsleitung 6 herrschenden Druck zugeführt. In der ersten Arbeitsleitung 5 ist dazu ein erster Drucksensor 105 angeordnet. Entsprechend ist in der zweiten Arbeitsleitung 6 ein zweiter Drucksensor 106 angeordnet. Der erste Drucksensor 105 und der zweite Drucksensor 106 sind über eine erste bzw. eine zweite Sensorleitung 107, 108 mit dem elektronischen Steuergerät 94 verbunden. Damit kann ein Mindestdruckanstieg über die Hydropumpe 3 gemessen werden. Dies wird nachfolgend bei der Erläuterung des Verfahrens zur Steuerung des hydrostatischen Antriebs 1 noch ausführlich erläutert.

Ferner ist ein Drehzahlfühler 109 an der Antriebswelle 4 angeordnet. Mit Hilfe des Drehzahlfühlers 9 wird die Drehzahl der Antriebswelle 4 ermittelt. Damit kann der Antriebsmotor 2 wie durch die Auswertung der Signale des ersten und des zweiten Drucksensors 105 und 106 in das Verfahren zur Steuerung des hydrostatischen Antriebs 1 einbezogen werden. Der Drehzahlfühler 109 ist über eine dritte Sensorleitung 110 ebenfalls mit dem elektronischen Steuergerät 94 verbunden.

Zur Beurteilung, ob eine beschleunigte Fahrt unter Verwendung der gespeicherten Druckenergie des ersten Speichers 40 wirtschaftlich ist, ist die Kenntnis des Ladezustands des ersten Speichers 40 und des zweiten Speichers 41 erforderlich. Hierzu sind in der Hochdruckspeicherleitung 33 bzw. der Niederdruckspeicherleitung 54 ein Hochdrucksensor 111 bzw. ein Niederdrucksensor 112 angeordnet. Der Hochdrucksensor 111 übermittelt sein Signal, mit dem der Druck in dem ersten Speicher 40 ermittelt wird, über eine vierte Sensorleitung 113 an das elektronische Steuergerät 94. In entsprechender Weise misst der Niederdrucksensor 112 den Druck in der Niederdruckspeicherleitung 54. Der Druck in der Niederdruckspeicherleitung 54 stimmt mit dem in dem zweiten Speicher 41 herrschenden Druck überein. Das elektrische Signal, welches dem in dem zweiten Speicher 41 herrschenden Druck entspricht, wird über eine fünfte Sensorleitung 114 an das elektronische Steuergerät 94 übermittelt.

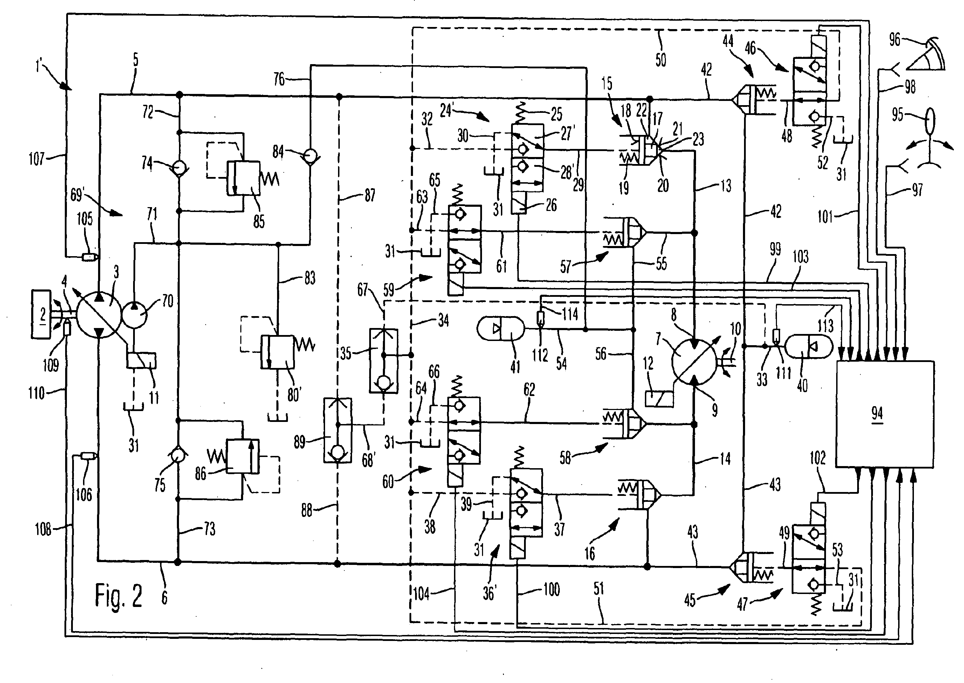

In der Fig. 2 ist ein zweites Ausführungsbeispiel des erfindungsgemäßen hydrostatischen Antriebs 1' dargestellt. Dabei werden, um unnötige Wiederholungen zu vermeiden, für gleiche Bauelemente gleiche Bezugszeichen verwendet. Auf deren erneute Beschreibung wird verzichtet.

Im Unterschied zu dem Ausführungsbeispiel der Fig. 1 ist bei dem zweiten Ausführungsbeispiel der Fig. 2 anstelle des ersten Druckbegrenzungsventils 80 und des zweiten Druckbegrenzungsventils 82 lediglich ein Speisedruckbegrenzungsventil 80' vorgesehen. Das Speisedruckbegrenzungsventil 80' ist über eine Speisedruckbegrenzungsleitung 83 mit der Speiseleitung 71 verbunden. Ferner ist die Speiseleitung 71 mit der Druckhalteleitung 76 verbunden.

Beim Übergang von der Speiseleitung 71 zu der Druckhalteleitung 76 ist ein drittes Rückschlagventil 84 vorgesehen. Das dritte Rückschlagventil 84 kann vorteilhaft auch bei dem Ausführungsbeispiel der Fig. 1 eingesetzt werden.

Das dritte Rückschlagventil 84 öffnet in Richtung auf die Druckhalteleitung 76 hin. Durch das Speisedruckbegrenzungsventil 80' wird in der Speiseleitung 71 eine Druckbegrenzung auf einen maximal zulässigen Speisedruck bewirkt. Dieser liegt beispielsweise bei 25 bar. Sofern in dem zweiten Speicher 41 ein Druck herrscht, der diesen maximal zulässigen Speisedruck überschreitet, geht das dritte Rückschlagventil 84 in seine geschlossene Position und trennt somit den zweiten Speicher 41 von der geänderten Speiseeinrichtung 69'. Ist jedoch durch Leckage beispielsweise der Druck in dem zweiten Speicher 41 unter den Speisedruck abgesunken, so öffnet das dritte Rückschlagventil 84 und der zweite Speicher 41 wird aus der geänderten Speiseeinrichtung 69' mit Hilfe der Speisepumpe 70 befüllt.

Ferner wird im Gegensatz zu dem Ausführungsbeispiel der Fig. 1 der jeweils höhere der beiden Arbeitsleitungsdrücke in der ersten Arbeitsleitung 5 bzw. der zweiten Arbeitsleitung 6 nicht unmittelbar über die Hydropumpe 3 dem Wechselventil 35 zugeführt. Vielmehr ist ein weiteres Wechselventil 89 vorgesehen. Das weitere Wechselventil 89 ist über eine erste Wechselventilleitung 87 mit der ersten Arbeitsleitung 5 verbunden. Über eine zweite Wechselventilleitung 88 ist das weitere Wechselventil 89 mit der zweiten Arbeitsleitung 6 verbunden. Der Ausgang des weiteren Wechselventils 89, an dem der jeweils höhere der beiden Arbeitsleitungsdrücke anliegt, ist über eine Wechselventilverbindungsleitung 68' mit einem Eingang des Wechselventils 35 verbunden. Über das Wechselventil 35 wird wie schon beim Ausführungsbeispiel der Fig. 1 somit der höhere der beiden Arbeitsleitungsdrücke mit dem in der Speicherverbindungsleitung 67 herrschenden Druck verglichen und der höchste Druck der Druckzuführungsleitung 34 zugeführt.

Ferner sind bei dem ersten Pilotventil 24' und dem zweiten Pilotventil 36' des zweiten Ausführungsbeispiels gegenüber dem ersten Ausführungsbeispiel die erste Schaltposition 27' und die zweite Schaltposition 28' gegeneinander getauscht. Damit wird in dem Ruhezustand des ersten Pilotventils 24', der durch die Ventilfeder 25 bestimmt ist, der erste Druckzuführungsleitungszweig 32 mit der ersten Steuerdruckleitung 29 verbunden. Dementsprechend ist in der Ruheposition des zweiten Pilotventils 36' der zweite Druckzuführungsleitungszweig 38 mit der zweiten Steuerdruckleitung 37 verbunden. Damit wird erreicht, dass während eines normalen hydrostatischen Fahrbetriebs das erste Sitzventil 15 und das zweite Sitzventil 16 jeweils in ihrer geöffneten Position sind und die Hydropumpe 3 und der Hydromotor 7 über die erste Arbeitsleitung 5, die zweite Arbeitsleitung 6 sowie die erste Verbindungsleitung 13 und die zweite Verbindungsleitung 14 in einem einfachen geschlossenen hydraulischen Kreislauf miteinander verbunden sind. Ein Bestromen der Elektromagnete der Pilotventile 24' und 36' ist nicht erforderlich.

Zur Absicherung der ersten Arbeitsleitung 5 und der zweiten Arbeitsleitung 6 gegen überhöhte Arbeitsleitungsdrücke ist parallel zu dem ersten Rückschlagventil 74 ein erstes paralleles Druckbegrenzungsventil 85 angeordnet. Das erste parallele Druckbegrenzungsventil 85 öffnet in Richtung zu der Speiseleitung 71 hin, sofern der Druck in der ersten Arbeitsleitung 5 einen durch eine Feder des ersten parallelen Druckbegrenzungsventils 85 eingestellten Wert überschreitet.

In vergleichbarer Weise ist ein zweites paralleles Druckbegrenzungsventil 86 vorgesehen. Das zweite parallele Druckbegrenzungsventil 86 ist parallel zu dem zweiten Rückschlagventil 75 angeordnet. Es öffnet, sofern der Druck in der zweiten Arbeitsleitung 6 den an dem zweiten parallelen Druckbegrenzungsventil 86 durch eine weitere Feder eingestellten kritischen Druck überschreitet.

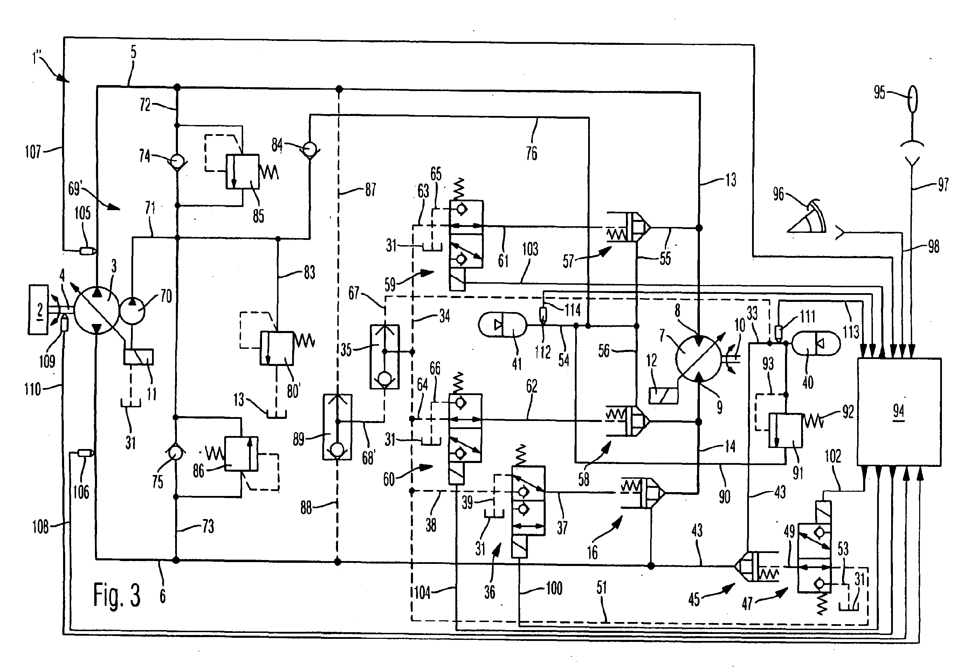

Bei dem dritten Ausführungsbeispiel eines erfindungsgemäßen hydrostatischen Antriebs 1'', das in der Fig. 3 dargestellt ist, ist eine Rückgewinnung von kinetischer Energie lediglich für eine Fahrtrichtung vorgesehen. Diese Fahrtrichtung entspricht der vorbeschriebenen Vorwärtsfahrt, bei der die Hydropumpe 3 in die erste Arbeitsleitung 5 fördert. Der Bauaufwand für einen solchen hydrostatischen Antrieb 1'', der lediglich für eine Fahrtrichtung eine Energierückgewinnung vorsieht, verringert sich erheblich. So ist insbesondere das erste Pilotventil 24' sowie das erste Sitzventil 15 ebenso wenig erforderlich wie das dritte Pilotventil 46 sowie das dritte Sitzventil 44 und die entsprechend nicht erforderlichen Leitungen. Das in der Fig. 3 gezeigte dritte Ausführungsbeispiel beruht auf dem in der Fig. 2 gezeigten Ausführungsbeispiel, sodass die übrigen Elemente mit den bereits zu Fig. 2 beschriebenen übereinstimmen.

Zusätzlich ist bei dem Ausführungsbeispiel der Fig. 3 eine Sicherungsleitung 90 vorgesehen. Die Sicherungsleitung 90 verbindet die Niederdruckspeicherleitung 54 mit der Hochdruckspeicherleitung 33. In der Sicherungsleitung 90 ist ein Speicherdruckbegrenzungsventil 91 angeordnet. Das Speicherdruckbegrenzungsventil 91 sichert den ersten Speicher 40 gegen eine unzulässige Drucküberhöhung ab. Gleichzeitig ermöglich es, dass durch den hydrostatischen Antrieb 1'' eine hydrostatische Bremsung weiter durchgeführt wird, auch dann, wenn der erste Speicher 40 bereits vollständig aufgeladen ist. Hierzu wird durch eine Speicherdruckbegrenzungsventilfeder 92 ein Grenzwert für den Druck in dem ersten Speicher 40 eingestellt. Dieser Grenzwert entspricht dem Druck in dem ersten Speicher 40 bei dem maximalen Ladezustand des ersten Speichers 40.

Der in der Hochdruckspeicherleitung 33, die mit der Sicherungsleitung 90 verbunden ist, herrschende Speicherdruck des ersten Speichers 40 wird über eine Messleitung 93 einer Druckmessfläche des Speicherdruckbegrenzungsventils 91 zugeführt. Der dort erzeugte hydrostatische Druck wirkt entgegen der Kraft der Speicherdruckbegrenzungsventilfeder 92. Sofern der erste Speicher 40 vollständig gefüllt ist, öffnet das Speicherdruckbegrenzungsventil 91 und verbindet die Hochdruckspeicherleitung 33 mit der Niederdruckspeicherleitung 54. Damit fördert im Schiebebetrieb der Hydromotor 7 das Druckmittel nicht mehr in das erste Speicherelement 40, sondern über die Sicherungsleitung 90 und das darin angeordnete Speicherdruckbegrenzungsventil 91 zurück in die Niederdruckspeicherleitung 54. Es entsteht somit ein geschlossener hydraulischer Kreislauf, in dem das Speicherdruckbegrenzungsventil 91 den Volumenstrom drosselt und somit eine Bremswirkung erzeugt wird. Damit kann auch bei vollständig geladenen ersten Speicher 40 ein hydrostatisches Abbremsen erfolgen, ohne dass ein Volumenausgleich erforderlich ist.

Nachfolgend wir die Durchführung des Verfahrens zur Steuerung des Antriebs, wie er in einer der Figuren 1 bis 3 dargestellt ist erläutert. Die nachfolgenden Erläuterungen zur Durchführung der einzelnen Verfahrensschritte nehmen Bezug auf die Fig. 2 und den dort dargestellten hydrostatischen Antrieb 1'. Für die Antriebe 1 und 1'' nach den Fig. 1 und 3 treffen die Erläuterungen in vergleichbarer Weise zu.

Insbesondere stehen die nachfolgenden Erläuterungen stellvertretend auch für eine Umkehr der Fahrtrichtung. Die nachfolgenden Erläuterungen beziehen sich jedoch, um unnötige Wiederholungen zu vermeiden, auf eine Fahrt in Vorwärtsrichtung. Bei einer Fahrt in Vorwärtsrichtung wird wiederum angenommen, dass die Hydropumpe 3 Druckmittel in die erste Arbeitsleitung 5 fördert.

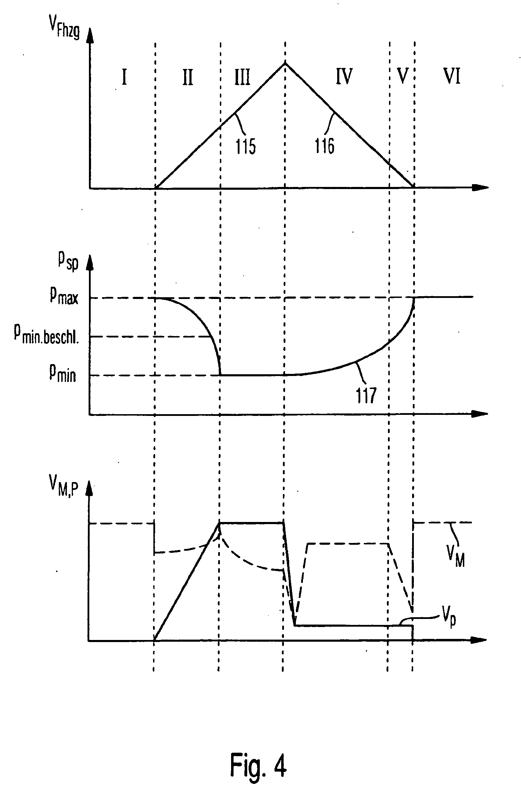

In der Fig. 4 sind insgesamt sechs Abschnitte I-VI dargestellt. Jeder der einzelnen Abschnitte entspricht einem bestimmten Fahrzustand. Der Abschnitt I entspricht einem Stillstand des Fahrzeugs. In Abschnitt II wird das durch den hydrostatischen Antrieb 1' angetriebene Fahrzeug unter Rückgewinnung der in dem ersten Speicher 40 gespeicherten Druckenergie beschleunigt. Dabei wird davon ausgegangen, dass in dem Abschnitt I der erste Speicher bereits aufgeladen ist. Die unterschiedlichen Möglichkeiten, den ersten Speicher 40 aufzuladen, werden nachfolgend noch erläutert.

In dem dritten Abschnitt III wird das Fahrzeug mit einem gewöhnlichen hydrostatischen Antrieb also ohne Rückgewinnung von Speicherenergie angetrieben. Abschnitt IV zeigt eine Verzögerung des Fahrzeugs. Dabei geht das Fahrzeug in einen Schiebebetrieb über und lädt den ersten Speicher 40 auf. Der Abschnitt V kennzeichnet den Übergang zwischen einem hydrostatischen Abbremsen des Fahrzeugs und dem Stillstand des angetriebenen Fahrzeugs. Abschnitt VI schließlich bezieht sich wiederum auf den Stillstand des Fahrzeugs, wie er beispielsweise in einer Parkposition vorliegt.

In dem obersten Diagramm der Fig. 4 ist zur Charakterisierung der einzelnen Abschnitte lediglich die Fahrgeschwindigkeit $v_{Fhzg}$ des durch den hydrostatischen Antrieb 1 angetriebenen Fahrzeugs dargestellt. In der Fig. 4 ist mit der ersten Linie 115 eine beschleunigte Fahrt vom Stillstand bis zu einer Maximalgeschwindigkeit dargestellt. Es schließt sich in den Bereich IV und V eine zweite Linie 116 an, die die Verzögerung des Fahrzeugs zeigt.

Ausgehend von einem vollständig geladenen ersten Speicher 40 ist der Verlauf der Drücke in dem ersten Speicher 40 in den jeweiligen Abschnitten I bis VI in dem mittleren Diagramm der Fig. 4 dargestellt. Der erste Speicher 40 ist zunächst im Abschnitt I auf seinen maximalen Speicherdruck $p_{max}$ aufgeladen. Ausgehend von diesem maximalen Speicherdruck $p_{max}$ wird durch Entnahme von Druckmittel aus dem ersten Speicher 40 in dem Abschnitt II das Fahrzeug beschleunigt. Entsprechend der Beschleunigung sinkt der Druck $p_{sp}$ in dem ersten Speicher 40 durch Entnahme des zur Beschleunigung erforderlichen Druckmittels aus dem ersten Speicher 40 ab, bis zu einem minimalen Druck $p_{min}$ in dem ersten Speicher 40. Dieser minimale Druck $p_{min}$ in dem ersten Speicher 40 wird gemäß der Darstellung des beispielhaften Fahrzyklus noch erreicht, bevor die Beschleunigung des Fahrzeugs abgeschlossen ist. Daher ist beim Übergang zwischen den Abschnitten II und III ein Wechsel von einem beschleunigten Fahrzustand unter Rückgewinnung der gespeicherten Druckenergie zu normalen einem normalen hydrostatischen Fahrantrieb vorgesehen. In dem Bereich III, in dem das Fahrzeug allein durch den Antriebsmotor 2 angetrieben wird, ändert sich der Druck in dem ersten Speicher 40 nicht. Es herrscht dort weiterhin der minimale Speicherdruck $P_{min}$.

Anschließend geht das Fahrzeug in einen Schiebebetrieb über, in dem Fahrzeug hydrostatisch abgebremst wird. In diesem Abschnitt IV steigt der Speicherdruck in dem ersten Speicher 40 wieder an, wie es der Verlauf der Kurve 117 in dem mittleren Diagramm der Fig. 4 darstellt. In der Fig. 4 ist ein idealisierter Verlauf dargestellt, bei dem der Druckanstieg während des Abbremsvorgangs in den Bereichen IV und V gerade so groß ist, dass der maximale Speicherdruck $p_{max}$ in dem ersten Speicher 40 wieder erreicht wird. In der Parkposition in dem Abschnitt VI wird der erste Speicher 40 abgekoppelt, um Leckage aus dem ersten Speicher 40 zu verhindern. Der Druck p, der in dem ersten Speicher 40 am Ende des Abbremsvorgangs in Abschnitt V erreicht ist, bleibt daher auch in der anschließenden Parksituation in Abschnitt VI erhalten.

Im untersten Diagramm der Fig. 4 ist stark vereinfacht schematisch der Verlauf des eingestellten Fördervolumens der Hydropumpe 3 bzw. des eingestellten Schluckvolumens des Hydromotors 7 dargestellt. Die entsprechenden Verläufe $V_P$ und $V_M$ werden nachfolgend bei der detaillierten Beschreibung der einzelnen Fahrzustände noch erläutert.

Bevor eine unter Rückgewinnung der gespeicherten Druckenergie beschleunigte Fahrt durchgeführt werden kann, wird beim Übergang des Abschnitts I zu dem Abschnitt II zunächst ermittelt, ob ein ausreichender Druck in dem ersten Speicher 40 herrscht. Hierzu wird durch das elektronische Steuergerät 94 das Signal des Hochdrucksensors 111 ausgewertet. Liefert das Signal einen Wert für den Druck in dem ersten Speicher 40, der größer ist als ein Mindestbeschleunigungsdruck $p_{min\_besch}$, so kann eine Beschleunigung unter Rückgewinnung der gespeicherten Druckenergie erfolgen. Wie es vorstehend bereits erläutert wurde, wird zur Beschleunigung unter Rückgewinnung von gespeicherter Energie der erste Speicher 40 mit der Saugseite der Hydropumpe 3 verbunden. Im vorliegenden Ausführungsbeispiel, bei dem eine Vorwärtsfahrt beschrieben wird, ist die Saugseite der Hydropumpe 3 die zweite Arbeitsleitung 6. Bevor die Hochdruckspeicherleitung 33 mit der zweiten Arbeitsleitung 6 verbunden wird, wird jedoch zunächst das zweite Sitzventil 16 in seine geschlossene Position gebracht. Hierzu wird das zweite Pilotventil 36' bestromt und damit in seine zweite Schaltposition gebracht. In der zweiten Schaltposition ist die zweite Steuerdruckleitung 37 mit der Druckzuführungsleitung 34 verbunden. Infolgedessen wird das zweite Sitzventil 16 in seine geschlossene Position gebracht. In der geschlossenen Position wird die zweite Verbindungsleitung 14 von der zweiten Arbeitsleitung 16 getrennt. Nun wird das vierte Sitzventil 45 geöffnet. Zum Öffnen des vierten Sitzventils 45 wird der Elektromagnet des vierten Pilotventils 47 über die vierte Steuerleitung 102 mit einem Steuersignal beaufschlagt. Aufgrund des Drucks in der zweiten Arbeitsleitung 6 sowie des Drucks in der Hochdruckspeicherleitung 33 bzw. dem zweiten Hochdruckspeicherleitungsabschnitt 43 wird das vierte Sitzventil 45 in seine geöffnete Position gebracht. In der geöffneten Position kann das in dem ersten Speicher 40 unter Druck stehende Druckmittel der Saugseite der Hydropumpe 3 zugeführt werden.

Die Reihenfolge beim Schalten der Sitzventile beim Umschalten auf einen kombinierten Fahrbetrieb, bei dem eine Rückgewinnung der in dem ersten Speicher 40 gespeicherten Druckenergie erfolgt, verhindert, dass das unter Druck in dem ersten Speicher 40 gespeicherte Druckmittel auf die stromabwärtige Seite des Hydromotors 7 wirkt. Ein Druckstoß auf den Hydromotor 3 wird damit verhindert. Der zeitliche Versatz zwischen dem Schließen des zweiten Sitzventils 16 und dem Öffnen des vierten Sitzventils 45 wird dabei durch ein erstes Zeitintervall festgelegt. Dieses erste Zeitintervall berücksichtigt vorzugsweise die Ventildynamik der Sitzventile 16, 45 und vorzugsweise auch die Schaltzeiten bzw. Rückstellzeiten der entsprechenden Pilotventile 36' und 47.

Zum Volumenstromausgleich ist ferner noch die stromabwärtige Seite des Hydromotors 7 mit dem zweiten Speicher 41 zu verbinden. Hierzu wird das sechste Pilotventil 60 durch das elektronische Steuergerät 94 angesteuert. Dazu wird über die sechste Steuerleitung 104 der Elektromagnet des sechsten Pilotventils 60 mit einem Steuersignal beaufschlagt. Infolgedessen wird das sechste Pilotventile 60 in seine zweite Schaltposition gebracht. In der zweiten Schaltposition wird das sechste Sitzventil 58 über die sechste Steuerdruckleitung 62 in das Tankvolumen 31 entspannt. Das sechste Sitzventil 58 wird daher in seine geöffnete Position gebracht und der stromabwärtige Anschluss 9 des Hydromotors 7 mit der Niederdruckspeicherleitung 54 und damit mit dem zweiten Speicher 41 verbunden.

Somit fließt das unter Druck aus dem ersten Speicher 40 entnommene Druckmittel über die zweite Arbeitsleitung 6 zu dem saugseitigen Anschluss der Hydropumpe 3. Das Druckmittel fließt weiter über die erste Arbeitsleitung 5 zu dem stromaufwärtigen Anschluss 8 der Hydropumpe 7. Dort wird es über den Hydromotor 7 entspannt, der an seiner Abtriebswelle 10 ein Abtriebsdrehmoment erzeugt. Das Öffnen des ersten Sitzventils 15 und des vierten Sitzventils 45 kann gleichzeitig erfolgen.

Der dem Hydromotor 7 an seinem stromaufwärtigen Arbeitsleitungsanschluss 8 zur Verfügung gestellte- Druck wird einerseits durch den Speicherdruck $P_{sp}$ in dem ersten Speicher 40 und andererseits durch eine mittels der Hydropumpe 3 erzeugte Druckerhöhung $\Delta p$ bewirkt. Um eine weitere Druckerhöhung durch die Hydropumpe 3 zu bewirken, wird der Hydropumpe 3 ein Antriebsdrehmoment über die Antriebswelle 4 zugeführt.

Damit wird eine Momentenaddition erreicht. Um eine unnötige Energieverschwendung durch den in der Regel als Dieselbrennkraftmaschine ausgeführten Antriebsmotor 2 zu verhindern, wird es vermieden, dass die Dieselbrennkraftmaschine in einen Schubbetrieb geht. Um dies zu verhindern, wird das durch den Hydromotor 7 erzeugte Motormoment kontrolliert. Dazu wird der Hydromotor 7 auf einen kleineren Wert für das Schluckvolumen gestellt. Das Fahrzeugmoment bzw. das einzustellende Motormoment berechnet sich dabei zu:

$$M_{FZ\_gefordert} = M_{Motor} = \frac{\left( p_{SpHigh} - p_{SpLow} + \dfrac{M_{Diesel} \, 2\pi}{V_P} \eta_{hm,P} \right) \bullet V_M}{2\pi} \eta_{hm,M} \tag{1}$$

$M_{Fz\_gefordert}$ ist dabei das zum Antrieb bzw. zum Beschleunigen des Fahrzeugs auf eine Fahrzeugzielgeschwindigkeit. $p_{SpHigh}$, bzw. $p_{SpLow}$ ist der Druck in dem ersten Speicher 40 bzw. dem zweiten Speicher 41. Diese Drücke werden bereits beschriebener Weise durch die beiden Drucksensoren 111 und 112 erfasst und ein korrespondierendes elektrisches Signal, beispielsweise eine Spannung, wird dem elektronischen Steuergerät 94 zugeführt. $V_P$ bzw. $V_M$ sind das Fördervolumen der Hydropumpe 3 bzw. das Schluckvolumen des Hydromotors 7. Das Fördervolumen $V_P$ bzw. das Schluckvolumen $V_M$ stehen in unmittelbarem Zusammenhang mit einem Schrägscheibenwinkel, sofern es sich bei den hydrostatischen Kolbenmaschinen der Hydropumpe 3 und des Hydromotors 7 um Axialkolbenmaschinen der Schrägscheibenbauart handelt. $M_{Diesel}$ ist das an der Antriebswelle 4 der Hydropumpe 3 zugeführte Drehmoment. Um das letztlich geforderte Drehmoment, welches zum Antrieb des Fahrzeugs erforderlich ist, tatsächlich zu erreichen, ist ferner noch der hydromechanische Wirkungsgrad der Pumpe $\eta_{hm,P}$ bzw. des Hydromotors 7 $\eta_{hm,M}$ zu berücksichtigen.

Wie es bereits erläutert wurde, muss verhindert werden, dass die Dieselbrennkraftmaschine des Antriebsmotors 2 in Schubbetrieb übergeht. Hierzu wird zunächst davon ausgegangen, dass die Dieselbrennkraftmaschine kein Drehmoment über die Antriebswelle 4 an die Hydropumpe 3 abgibt. Dadurch errechnet sich der maximale Motorschwenkwinkel des Hydromotors 7 aus dem Zusammenhang:

$$V_M < \frac{2\pi M_{FZ\_gefordert}}{\left(p_{SpHigh} - p_{SpLow}\right)\eta_{hm,M}} \qquad (2)$$

Ein größeres Schluckvolumen $V_n$ des Hydromotors 7 würde bereits aufgrund des Speicherdrucks ein das geforderte Moment übersteigendes Arbeitsmoment erzeugen und der Hydromotor würde sich in Folge dessen an dem Antriebsmotor 2 abstützen.

Um nun Sicherzustellen, dass die Dieselbrennkraftmaschine tatsächlich nicht in den Schubbetrieb übergeht, wird der Schwenkwinkel des Hydromotors 3 daher geringfügig kleiner gewählt. Infolgedessen steht der Dieselmotor unter Last und erzeugt ein Drehmoment zum Antrieb der Hydropumpe 3.

Die oben angegebenen Zusammenhänge können direkt zur Ermittlung der zweiten Verstellvorrichtung 12 des Hydromotors 7 herangezogen werden, wenn über einen Benutzer eine unmittelbare Vorgabe des geforderten Antriebsmoments für das Fahrzeug erfolgt.

Wird dagegen, wie dies häufig der Fall ist, über den Fahrhebel 95 lediglich eine Fahrzeugzielgeschwindigkeit vom Benutzer vorgegeben, so wird zunächst eine rechnerische Schätzung eines Vorsteuerwerts für ein gefordertes Hydromotormoment durchgeführt. Zur Ermittlung des Vorsteuerwerts wird eine Fahrzeugzielgeschwindigkeit $v_{soll}$ und eine Fahrzeug Ist-Geschwindigkeit $v_{ist}$ ermittelt. Die Fahrzeug Ist-Geschwindigkeit $v_{ist}$ wird z. B. aus dem Tacho-Signal ermittelt und in nicht dargestellter Weise dem elektronischen Steuergerät 94 zugeführt. Die Fahrzeugzielgeschwindigkeit $v_{soll}$ wird aus der Fahrhebelposition des Fahrhebels 95 ermittelt, der ein seiner Position entsprechendes Signal über die erste Signalleitung 97 an das elektronische Steuergerät 94 übermittelt. Der Vorsteuerwert ergibt sich nach dem Zusammenhang:

$$M_{schätz} = \left(v_{soll} - v_{ist}\right)k_1(m) + k_0 , \qquad (3)$$

wobei $M_{schätz}$ der Vorsteuerwert ist. Die Konstante $k_1(m)$ ist ein abhängig von der Fahrzeugmasse festgelegter Wert. Die Konstante $k_1(m)$ wird dabei ebenso wie die Konstante $k_0$ entweder empirisch festgelegt oder errechnet und dient der Festlegung des Beschleunigungsverhaltens des Fahrzeugs.

Zusätzlich zu diesem Vorsteuerwert $M_{schätz}$ kommt eine überlagerte Regelung zum Einsatz. Diese Regelung berücksichtigt dabei in einer ersten bevorzugten Form eine Mindestdruckaddition über die Hydropumpe 3. Hierzu wird durch den ersten Drucksensor 105 und den zweiten Drucksensor 106 jeweils ein Druckwert in der ersten Arbeitsleitung 5 bzw. der zweiten Arbeitsleitung 6 gemessen. Aus dem zwischen diesen beiden Drucksensoren 111, 112 errechneten Druckdifferenz ist es möglich, eine Mindestdruckerhöhung, die durch die Hydropumpe 3 durchgeführt wird, zu überwachen. Dabei wird ein Grenzwert für diese Mindestdruckerhöhung festgelegt. Die Druckerhöhung wird aufgrund des der Hydropumpe 3 zugeführten Drehmoments durch die Dieselmaschine hervorgerufen. Damit kann durch Überwachung der Druckverhältnisse an dem Drucksensor 105 und 106 sichergestellt werden, dass die Dieselbrennkraftmaschine mit einer Last beaufschlagt wird und nicht in den Schubbetrieb übergeht.

Eine alternative Möglichkeit zum Sicherstellen, dass die Dieselbrennkraftmaschine nicht in den Schubbetrieb übergeht, ist es, die Dieseldrückung zu erfassen. Hierzu wird ein Drehzahlwert durch den Drehzahlfühler 109 an der Antriebswelle 4 gemessen und dem elektronischen Steuergerät 94 zugeführt. Wird entweder bei Messung der Drücke in der ersten Arbeitsleitung 5 und der zweiten Arbeitsleitung 6 oder durch Überwachung der Drehzahl der Antriebswelle 4 festgestellt, dass die erforderliche Dieseldrückung oder die erforderliche Mindestdruckaddition bei einem dem Vorsteuerwert $M_{Schätz}$ entsprechendes Schluckvolumen $V_M$ nicht erreicht wird, so wird die Verstellvorrichtung 12 des Hydromotors 7 so angesteuert, dass der Hydromotor 7 in Richtung kleinerer Schwenkwinkel verstellt wird. Damit wird die Last auf die Dieselbrennkraftmaschine erhöht. Die Ansteuerung der Verstellvorrichtungen 11 und 12 erfolgt deshalb durch das elektronische Steuersignal 94.

Alternativ hierzu kann der Vorsteuerwert $M_{Schätz}$ erhöht werden.

Bei einer direkten Vorgabe eines Moments für den Dieselmotor ist auch eine rechnerische Addition der Momente möglich. Das jeweils durch den Hydromotor 7 zur Verfügung zu stellende Drehmoment ist gleich der Summe des durch den Speicherdruck $p_{sp}$ des ersten Speichers 40 an dem Hydromotor 7 erzeugten Drehmoment und dem durch die Dieselbrennkraftmaschine hinzukommenden Drehmoment.

Wenn aus dem geforderten Drehmoment der Schwenkwinkel für den Hydromotor 7 festgelegt ist, kann aus der Fahrzeuggeschwindigkeit $V_{ist}$ das erforderliche Übersetzungsverhältnis des gesamten hydrostatischen Getriebes ermittelt werden. Aus diesem Übersetzungsverhältnis wird anschließend der Schwenkwinkel für die Hydropumpe 3 ermittelt. Ein entsprechendes Signal zur Ansteuerung der ersten Verstellvorrichtung 11 wird durch das elektronische Steuergerät 94 erzeugt und der ersten Verstellvorrichtung 11 zugeführt.

Um beim Übergang zwischen den Bereichen II und III also einem Fahren unter Rückgewinnung von Energie aus dem ersten Speicher 40 und einem Fahren, bei dem die Antriebsleistung allein durch den Antriebsmotor aufgebracht wird, zu ermöglichen, darf ferner der Motorschwenkwinkel bzw. das Schluckvolumen $V_M$ des Hydromotors 3 nicht unter einen Mindestwert abfallen. Damit wird sichergestellt, dass ein Schwenkwinkelsprungzwischen dem regenerativen Beschleunigen und dem normalen Fahrbetrieb nicht auftritt. Dieser könnte entstehen, da die Berechnung des Schwenkwinkels während der Rückgewinnung der Energie in oben beschriebener Weise erfolgt.

Davon abweichend kann es zu anderen Schwenkwinkelberechnungen für den normalen Fahrbetrieb kommen.

Im Übernahmepunkt zwischen den Bereichen II und III müssen diese beiden Werte identisch sein. Es wird daher ein minimaler Schwenkwinkel gemäß folgendem Zusammenhang ermittelt:

$$V_{M\_min\_rel} = \frac{k_{p1} - (p_{spHigh} - p_{spLow})}{k_{p1} - k_{p2}} \qquad (4)$$

Dabei ist $k_{p1}$ der maximal mögliche Differenzdruck zwischen den Drücken in dem ersten Speicher 40 und dem zweiten Speicher 41. $k_{p2}$ ist dagegen die mininal mögliche Differenz zwischen den beiden Speicherdrücken. Die minimale Speicherdruckdifferenz wird durch das Schaltkriterium z. B. das Erreichen des minimalen Speicherdrucks $p_{min}$ festgelegt, bei dem von dem regenerativen Beschleunigungsvorgang auf einen normalen Fahrbetrieb umgestellt wird.

Die oben angegebene Bedingung führt dazu, dass im Schaltpunkt, also dem minimalen am Ende einer regenerativen Beschleunigung möglichen Differenzdruck zwischen dem ersten Speicher 40 und dem zweiten Speicher 41 das relative minimale Motorschluckvolumen $V_{M\_min\_rel}$ eins wird. Das relative minimale Motorschluckvolumen $V_{M\_min\_rel}$ gibt das Verhältnis zu dem maximal möglichen Schluckvolumen $V_M$ des Hydromotors 3 an. Damit wird bei dem minimalen Differenzdruck zwischen dem ersten Speicher und dem zweiten Speicher, wenn von dem regenerativen Beschleunigungsvorgang zu dem normalen Fahrbetrieb umgeschaltet wird, das minimale relative Motorschluckvolumen gleich 1. Mit oben angegebener Beziehung wird sicher gestellt, dass zwar bei großen noch vorhandenen Energiereserven in dem ersten Druckspeicher ein relativ kleiner Motorschwenkwinkel eingestellt werden kann. Mit zunehmender Entleerung des ersten Speichers 40 nähert sich jedoch der minimale Schwenkwinkel immer weiter dem im normalen Fahrbetrieb erforderlichen Motorschwenkwinkel an und ist schließlich gleich groß wie das für den normalen Fahrbetrieb berechnete Schluckvolumen. Ist der erste Speicher 40 daher bis auf einen minimalen Druck $p_{min}$ durch die regenerative Beschleunigung entleert, so wird zu einem normalen hydrostatischen Fahrbetrieb gewechselt. Dies entspricht in der Fig. 4 den Übergang zwischen den Bereichen II und III.

Die Zunahme des Motorschluckvolumens $V_M$ in dem Abschnitt II ist in dem untersten Diagramm der Fig. 4 dargestellt und zeigt die Erhöhung des Motorschluckvolumens mit abnehmendem Speicherdruck des ersten Speichers 40.

Um eine Beschleunigung zu erreichen, wird im gleichen Zeitraum über den Abschnitt II das Volumen der Hydropumpe 3 bis zu ihrem maximalen Fördervolumen hin verstellt.

Die Berechnung des Schluckvolumens $V_M$ des Hydromotors 7 und des Fördervolumens $V_p$ der Hydropumpe 3 erfolgt während eines normalen Fahrbetriebs (Abschnitt III) in Abhängigkeit von der Fahrzeugzielgeschwindigkeit $V_{soll}$ und der dafür erforderlichen Soll-Übersetzung. Um bei einem Wechsel zwischen den beiden Fahrzuständen eine Zugkraftunterbrechung zu vermeiden, wird zunächst das vierte Sitzventil 45 geschlossen. Ein unbeabsichtigtes Füllen des ersten Speichers 40, der zu diesem Zeitpunkt ein niedriges Druckniveau aufweist, wird damit verhindert. Nachdem folglich der erste Speicher 40 von der Saugseite der Hydropumpe 3 abgetrennt ist, wird anschließend der stromabwärtige Arbeitsanschluss 9 des Hydromotors 7 mit der zweiten Arbeitsleitung 6 verbunden. Hierzu wird das zweite Sitzventil 16 durch Zurücknehmen des über die zweite Steuersignalleitung 100 dem Elektromagneten des zweiten Pilotventils 36' zugeführten Signals geöffnet. Durch die Schaltreihenfolge wird erreicht, dass ein Druckanstieg auf der stromabwärtigen Seite des Hydromotors 7, also der Seite, auf der der Niederdruck herrscht, verhindert wird. Da zum Zeitpunkt, da das zweite Sitzventil 16 geöffnet wird, das vierte Sitzventil 45 bereits geschlossen war, ist auch der höher liegende Speicherdruck des ersten Speichers 40 bereits abgebaut. Ferner existiert im Zeitpunkt, da das zweite Sitzventil 16 geöffnete wird, noch eine Verbindung von der stromabwärtigen Seite des Hydromotors 7 zu dem zweiten Speicher 41. Der als Niederdruckspeicher ausgelegte zweite Speicher 41 kann daher noch zur Dämpfung des Systems beitragen. Schließlich wird das sechste Sitzventil 58 geschlossen. In dem Abschnitt III ist daher eine weitere Beschleunigung durch einen normalen hydrostatischen Fahrantrieb im geschlossenen Kreislauf möglich. Das erste Sitzventil 15 und das zweite Sitzventil 16 sind in der geöffneten Position. Die übrigen Sitzventile 44, 45, 57 und 58 sind nun geschlossen und der Hydromotor 7 ist mit der Hydropumpe 3 in einem geschlossenen hydraulischen Kreislauf über die erste Arbeitsleitung 5 und die zweite Arbeitsleitung 6 verbunden. Zwischen dem Schließen des vierten Sitzventils 45 und dem Öffnen des zweiten Sitzventils 16 liegt vorzugsweise ein zweites Zeitintervall. Das zweite Zeitintervall berücksichtigt ebenfalls die Ventildynamik.

Der Übergang zum Speicherbremsen, also dem Aufladen des ersten Speichers 40 während des hydrostatischen Abbremsens des Fahrzeugs (Abschnitt III), wird durch Betätigen der Bremseinrichtung eingeleitet. Die Bremseinrichtung ist im vorliegenden Fall als Bremspedal 96 ausgeführt. An dem Bremspedal 96 ist ein Sensor angeordnet, der über eine zweite Signalleitung 98 ein von der Stellung des Bremspedals 96 abhängiges Signal an die elektronische Steuereinheit 94 weiterleitet.

Wird durch die elektronische Steuereinheit 94 ein Betätigen des Bremspedals 96 erkannt, wird zunächst der Schwenkwinkel sowohl der Hydropumpe 3 als auch des Hydromotors 7 zurückgenommen. Damit wird das Fördervolumen $V_P$ der Hydropumpe 3 und das Schluckvolumen $V_M$ des Hydromotors 7 im gleichen Verhältnis reduziert. Das Übersetzungsverhältnis des hydrostatischen Getriebes mit der Hydropumpe 3 und dem Hydromotor 7 bleibt dabei konstant. Das Reduzieren der Schwenkwinkel von Hydropumpe 3 und Hydromotor 7 verringert die Ruckelneigung beim Übergang zum Speicherbremsen.

Das Fördervolumen der Hydropumpe 3 und das Schluckvolumen des Hydromotors 7 werden so lange reduziert, bis die Hydropumpe 3 ein minimales Fördervolumen erreicht hat. Dieses minimale Fördervolumen ist von Null verschieden und ermöglicht das Betreiben von Nebenverbrauchern auch während des Speicherbremsens.

Um eine Bremswirkung zu erzielen, muss anschließend der Hydromotor 7 wieder auf ein größeres Schluckvolumen eingestellt werden. Die Einstellung dieses größeren Schluckvolumens ist dabei abhängig von der geforderten zu erzielenden Bremswirkung. Dazu wird der Hydromotor 7 auf ein Schluckvolumen $V_M$ gestellt, welches abhängig- von einer durch einen Bediener eingestellten Bremspedalposition ermittelt wird.

Da der Gegendruck, gegen den der nun als Pumpe arbeitende Hydromotor 7 während des Speicherbremsens Druckmittel in den ersten Speicher 40 fördert, mit zunehmendem Füllgrad des ersten Speichers 40 ansteigt, muss das einzustellende Schluckvolumen $V_M$ des Hydromotors 7 neben der Bremspedalposition auch den aktuellen Füllgrad des ersten Speichers 40 berücksichtigen. Mit zunehmender Druckdifferenz zwischen dem ersten Speicher 40 und dem zweiten Speicher 41 wird das Schluckvolumen des Motors daher verringert. Weiterhin ist es vorteilhaft zusätzlich zu der Druckdifferenz zwischen dem ersten Speicher 40 und dem zweiten Speicher 41 einen Druckabfall zu berücksichtigen, der sich aus den Drosselverlusten in Leitungen und Armaturen ergibt. Diese Drosselverluste werden durch einen Druckabfallwert $\Delta p\,(V_M, v_{ist})$ repräsentiert, welcher seinerseits von der Fahrzeug-Ist-Geschwindigkeit und dem eingestellten Schluckvolumen $V_M$ des Hydromotors 7 abhängt. Der Druckabfallwert ist abhängig von der Fahrzeuggeschwindigkeit, da die jeweils aktuelle Fahrzeuggeschwindigkeit $v_{ist}$ in die Drehzahl des Hydromotors 7 eingeht und somit auf den geförderten Volumenstrom zurückwirkt. Für eine bestimmte Bremspedalposition wird folglich das Schluckvolumen des Hydromotors 7 durch folgenden Zusammenhang wiedergegeben:

$$V_M = \frac{M_{soll}\,2\pi}{\left(p_{spHigh} - p_{spLow}\right) + \Delta p\left(V_M\,v_{ist}\right)} \qquad (5)$$

Während des Speicherbremsens sind zusätzlich zu dem ersten Speicher 40 und dem zweiten Speicher 41 vorzugsweise auch die Arbeitsleitungen 5, 6 mit dem Hydromotor 7 verbunden. Das durch den Hydromotor 7 über die zweite Motorverbindungsleitung 14 geförderte Druckmittel wird daher einerseits in den ersten Speicher 40 gefördert. Dabei wird kinetische Energie in Druckenergie umgewandelt, die in dem ersten Speicher 40 gespeichert wird und für nachfolgende Beschleunigungsvorgänge wieder zur Verfügung steht. Zudem wird ein Teil des von dem Hydromotor 7 geförderten Druckmittels beim Bremsen in Vorwärtsrichtung in die zweite Arbeitsleitung 6 gefördert. Dieser Volumenstromanteil steht daher zum Antreiben von Nebenaggregaten zur Verfügung. Ferner ermöglicht das Fördern eines Teilvolumenstroms über die Hydropumpe 3, bei nicht ausreichender Bremswirkung durch das Befüllen des ersten Speichers 40 mit Druckmittel das Stützmoment des Antriebsmotors 2 auszunutzen.

Wird der Hydromotor 7 bis zum Stillstand abgebremst, was gleich bedeutend mit dem Stillstand der Abtriebswelle 10 ist, muss berücksichtigt werden, dass während des Speicherbremsens der erste Speicher 40 und der zweite Speicher 41 mit dem Hydromotor 7 verbunden sind. Dadurch kann ein Blockieren des Fahrzeugs nicht erfolgen. Zum Anhalten des Fahrzeugs muss daher der Hydromotor 7 von den Speichern 40, 41 getrennt werden. Um ein plötzliches Zusammenbrechen des Volumenstroms zu verhindern, wird vor dem Abtrennen des Speichers 40, 41 zunächst mit sinkender Fahrzeuggeschwindigkeit $v_{ist}$, also sinkender Drehzahl der Abtriebswelle 10, das Schluckvolumen $V_M$ des Hydromotors 7 reduziert. Dadurch kommt es zu einer geringeren Bremswirkung aufgrund des nachlassenden Bremsmoments. Wird ein bei der Auslegung des Antriebs definierbarer Geschwindigkeitswert erreicht, so werden die Speicher 40, 41 von dem Hydromotor 7 abgekoppelt. Hierzu wird das vierte Sitzventil 45 geschlossen. Entsprechend wird auch das fünfte Sitzventil 57 geschlossen. Der Hydromotor 7 ist daher nur noch über das erste und das zweite Sitzventil 15, 16 in einem geschlossenen hydraulischen Kreislauf mit der Hydropumpe 3 verbunden. Um das Fahrzeug hydrostatisch zu blockieren, wird die Hydropumpe 3 auf verschwindendes Fördervolumen gestellt. Nachdem das Fahrzeug durch Reduzieren des Pumpenschwenkwinkels auf Null bis zum Stillstand abgebremst wurde, sind das erste und zweite Sitzventil 15, 16 offen. Alle übrigen Sitzventile sind dagegen geschlossen. Bei stehendem Fahrzeug ist die Pumpe Null-geschwenkt und der Hydromotor 7 wird in der Regel auf maximales Schluckvolumen verstellt.

Zur Integration von automotivem Fahren, bei dem der Bediener anstelle einer Fahrzeugzielgeschwindigkeit $v_{soll}$ ein Motormoment bzw. einen Beschleunigungswunsch vorgibt, kann eine überlagerte Momentenregelung vorgesehen werden. Dabei gibt die Position des Fahrhebels 95 eine Soll-Drückung des Dieselmotors vor. Mit Hilfe eines Reglers wird daraus die Anstiegsrate des Soll-Geschwindigkeitsverlaufs ermittelt. Die Fahrzeugzielgeschwindigkeit $v_{soll}$ wird aufgrund der Regeldifferenz ermittelt. Wird aus der Regeldifferenz die Fahrzeugzielgeschwindigkeit $v_{soll}$ ermittelt, so kann nach dem vorstehend bereits beschriebenen Verfahren aus diesem Fahrzeugszielgeschwindigkeitswert $v_{soll}$ und dem Fahrzeug-Ist-Geschwindigkeitswert $v_{ist}$ der Vorsteuerwert ermittelt werden. Die nachfolgende Bestimmung des Schluckvolumens des Hydromotors sowie des Fördervolumens der Hydropumpe 3 erfolgt im bereits beschriebener Weise.

Die vorstehenden Ausführungen betreffen einen hydrostatischen Antrieb, bei dem das erste und das zweite Pilotventil in ihrer Ruhestellung zu einer Öffnung des ersten und des zweiten Sitzventils 15, 16 führen. In dieser Ausgangsposition befindet sich das durch den hydrostatischen Antrieb 1' angetriebene Fahrzeug in seinem normalen hydrostatischen Fahrbetrieb (Abschnitt III). Ferner wurde den vorstehenden Ausführungen ein Fahrantrieb zugrundegelegt, welcher ein Speicherbremsen sowohl für Vorwärts- als auch für Rückwärtsfahrt ermöglicht. Ebenso ist es möglich, eine regenerative Beschleunigung also ein Beschleunigen unter Nutzung der in dem ersten Speicher 40 gespeicherten Druckenergie, sowohl für Vorwärtsfahrt als auch für Rückwärtsfahrt durchzuführen. Um unnötige Wiederholungen zu vermeiden, wird auf eine erneute detaillierte Beschreibung des Speicherbremsens zur Rückgewinnung der gespeicherten Druckenergie im Bezug auf den hydrostatischen Antrieb 1 der Fig. 1 sowie auf den lediglich für die Speicherung und die Rückgewinnung der Energie bei Vorwärtsfahrt eingerichteten hydrostatischen Antrieb 1'' verzichtet.

Die Erfindung ist nicht auf das dargestellte Ausführungsbeispiel beschränkt. Vielmehr wird der Umfang des Erfindung durch die Ansprüche bestimmt.

**Patentansprüche**

1. Verfahren zum Steuern eines hydrostatischen Antriebs (1, 1', 1") mit einer Hydropumpe (3) und einem Hydromotor (7), einem ersten und einem zweiten hydraulischen Speicher (40, 41) zur Speicherung und Rückgewinnung von Energie, mit folgenden Verfahrensschritten:

   - Speichern von Druckenergie in dem ersten Speicher (40)
   - Verbinden des ersten Speichers (40) mit einer Saugseite der Hydropumpe (3) zur Rückgewinnung der in dem ersten Speicher (40) gespeicherten Druckenergie
   - Verbinden eines stromabwärtigen Arbeitsleitungsanschlusses (8, 9) des Hydromotors (7) mit dem zweiten Speicher (41) und
   - Trennen des stromabwärtigen Arbeitsleitungsanschlusses (9, 8) des Hydromotors (7) von der Saugseite der Hydropumpe (3),

   **dadurch gekennzeichnet,**
   **dass** zur Verhinderung eines Übergangs eines Antriebsmotors (2) der Hydropumpe (3) in einen Schubbetrieb der Schwenkwinkel des Hydromotors (7) während der Rückgewinnung der Druckenergie geringfügig kleiner als ein Schwenkwinkel gewählt wird, welcher sich aus einem von dem Hydromotor (7) geforderten Drehmoment ($M_{FZ\_gefordert}$) und einer Druckdifferenz ($p_{SpHigh}$ - $p_{SpLow}$) zwischen dem ersten Speicher (40) und dem zweiten Speicher (41) über den Zusammenhang $2\pi \cdot (M_{FZ\text{-}gefordert})/[(p_{SpHigh} - p_{SpLow}) \cdot \eta_{hm,M}]$ ergibt, wobei $\eta_{hm,M}$ der hy-dromechanische Wirkungsgrad des Hydromotors (7) ist und wobei die Hydropumpe (3) während der Rückgewinnung der Druckenergie **dadurch** durch den Antriebsmotor (2) mit einem Antriebsdrehmoment beaufschlagt wird.

2. Verfahren nach Anspruch 1,
   **dadurch gekennzeichnet,**

**dass** zunächst der stromabwärtige Anschluss (8, 9) des Hydromotors (7) von der Saugseite der Hydropumpe (3) getrennt wird und nach einem festgelegten Zeitintervall der erste Speicher (40) mit der Saugseite der Hydropumpe (3) verbunden wird.

3. Verfahren nach Anspruch 1 oder 2,
**dadurch gekennzeichnet,**
**dass** der Hydromotor (7) während der Rückgewinnung von Energie auf ein Schluckvolumen ($V_m$) eingestellt wird, welches auf Basis eines errechneten Vorsteuerwerts ($M_{schätz}$) für ein Hydromotormoment ermittelt wird.

4. Verfahren nach Anspruch 3,
**dadurch gekennzeichnet,**
**dass** der Vorsteuerwert ($M_{schätz}$) unter Berücksichtigung von gemessenen Ist-Größen korrigiert wird.

5. Verfahren nach Anspruch 3 oder 4,
**dadurch gekennzeichnet,**
**dass** das Vorsteuerwert ($M_{schätz}$) aus einer Differenz zwischen einer Fahrzeugzielgeschwindigkeit ($v_{soll}$) und einer Fahrzeug Ist-Geschwindigkeit ($v_{ist}$) ermittelt wird.

6. Verfahren nach einem der Ansprüche 1 bis 5,
**dadurch gekennzeichnet,**
**dass** am Ende einer Rückgewinnung von gespeicherter Energie aus dem ersten Speicher (40) zunächst der erste Speicher (40) von der Saugseite der Hydropumpe (3) abgetrennt wird und nach einem festgelegten zweiten Zeitintervall der stromabwärtige Arbeitsanschluss (8, 9) des Hydromotors (7) mit der Saugseite verbunden wird, bevor der stromabwärtige Arbeitsanschluss (8, 9) des Hydromotors (7) von dem zweiten Speicher (41) abgetrennt wird.

7. Verfahren nach Anspruch 6,
**dadurch gekennzeichnet,**
**dass** zum Speichern von Druckenergie der stromabwärtige Arbeitsanschluss (8, 9) des Hydromotors (7) mit dem ersten Speicher (40) verbunden wird und der stromaufwärtige Arbeitsanschluss (9, 8) des Hydromotors (7) mit dem zweiten Speicher (41) verbunden wird.

8. Verfahren nach Anspruch 7,
**dadurch gekennzeichnet,**
**dass** das Speichern von Druckenergie durch Betätigen einer Bremseinrichtung (96) eingeleitet wird und bei Betätigen einer Bremseinrichtung (96) sowohl der Hydromotor (7) als auch die Hydropumpe (3) zunächst bei konstantem Obersetzungsverhältnis auf ein geringeres Schluckvolumen (Vm) bzw. ein geringeres Fördervolumen ($V_p$) verschwenkt werden.

9. Verfahren nach einem der Ansprüche 6 bis 8,
**dadurch gekennzeichnet,**
**dass** bei Betätigen der Bremseinrichtung (96) eine Förderseite der Hydropumpe (3) und der zweite Speicher (41) mit dem stromaufwärtigen Arbeitsleitungsanschluss (8, 9) verbunden wird und dass bei Betätigen der Bremseinrichtung eine Saugseite der Hydropumpe (3) und der erste Speicher (40) mit einem stromabwärtigen Arbeitsanschluss (9, 8) des Hydromotors (7) verbunden wird.

10. Verfahren nach Anspruch 9,
**dadurch gekennzeichnet,**
**dass** während eines Speichervorgangs die Hydropumpe (3) auf ein von Null verschiedenes Fördervolumen ($V_p$) eingestellt wird.

11. Verfahren nach einem der Ansprüche 6 bis 10,
**dadurch gekennzeichnet,**
**dass** das Schluckvolumen (Vm) des Hydromotors (7) während der Speicherung von Energie in dem ersten Speicher (40) auf einen von einem Bremssignal der Bremseinrichtung (96) und einem effektiven Druckdifferenzwert abhängigen Wert eingestellt wird.

12. Verfahren nach einem der Ansprüche 1 bis 11,
**dadurch gekennzeichnet,**

**dass** beim Abbremsen vor Erreichen des Stillstands einer Abtriebswelle (10) des Hydromotors (7) der stromabwärtige Arbeitsanschluss (8, 9) des Hydromotors (7) von dem ersten Speicher (40) und der stromaufwärtige Arbeit sleitungsanschluss (9, 8) des Hydromotors (7) von dem zweiten Speicher (41) getrennt wird und dass das Fördervolumen ($V_p$) der Hydropumpe (3) auf Null verstellt wird.

13. Verfahren nach einem der Ansprüche 1 bis 12,
    **dadurch gekennzeichnet,**
    **dass** zum Starten einer mit der Hydropumpe (3) verbundenen Brennkraftmaschine der erste Speicher (40) mit der Saugseite der Hydropumpe (3) verbunden wird.

14. Verfahren nach einem der Ansprüche 1 bis 13,
    **dadurch gekennzeichnet,**
    **dass** zum Speichern von Druckenergie in dem ersten Speicher (40) die Hydropumpe (3) durch einen Antriebsmotor (2) angetrieben wird und die Förderseite der Hydropumpe (3) mit dem ersten Speicher (40) verbunden ist.


**Claims**

1. Method for controlling a hydrostatic drive (1,1', 1'') by using a hydraulic pump (3) and a hydraulic motor (7), a first and a second hydraulic accumulator (40, 41) to store and recover energy, comprising the following steps:

   - storing of pressure energy in a first accumulator (40)
   - coupling the first accumulator (40) with a suction side of a hydraulic pump (3) for the recovery of pressure energy being stored in the first accumulator (40).

   coupling a downstream working line port (8, 9) of the hydraulic motor (7) with the second accumulator (41), and

   - separating the downstream working line port (9, 8) of the hydraulic motor (7) from the suction side of the hydraulic pump (3),

   **characterized in that**
   during recovery of pressure energy the pivot angle of the hydraulic motor (7) is selected as being slightly less than a pivot angle which results from a torque ($M_{FZ\_gefordert}$) required by the hydraulic motor (7) and a pressure difference ($p_{spHigh}$ - $P_{spLoW}$) between the first accumulator (40) and the second accumulator (41) using the relation $2\pi \cdot (M_{FZ\_gefordert} / [(p_{SpHigh} - p_{SPLow}) \cdot \eta_{hm,M}]$ in order to prevent the transition of a drive motor (2) of the hydraulic pump (3) in an overrun mode,
   where $r|_h m$, M is the hydromechanical efficiency of the hydraulic motor (7), and
   where the hydraulic pump (3) is thus impinged with a drive torque during recovery of the pressure energy by the drive motor (2).

2. Method according to claim 1,
   **characterized in that**
   at first the downstream port (8, 9) of the hydraulic motor (7) is separated from the suction side of the hydraulic pump (3), and the first accumulator (40) is coupled to the suction side of the hydraulic pump (3) after a defined time interval.

3. Method according to claim 1 or 2, **characterized in that**
   during recovery of the energy the hydraulic motor (7) is set to a displacement ($V_m$) which has been determined based on a calculated pre-control value ($M_{Schätz}$) for a hydraulic motor torque.

4. Method according to claim 3, **characterized in that**,
   the pre-control value ($M_{Schätz}$) is adjusted by taking the measured actual values into account.

5. Method according to claim 3 or 4, **characterized in that**
   the pre-control value ($M_{Schätz}$) is determined by a difference between the vehicle target speed ($v_{soll}$) and an actual vehicle speed ($v_{ist}$).

6. Method according to one of the claims 1 to 5, **characterized in that**
   at the end of the recovery of stored energy from the first accumulator (40) the first accumulator (40) is separated from the suction side of the hydraulic pump (3) first, and the downstream working line port (8, 9) of the hydraulic motor (7) is coupled to the suction side after a defined second time interval, before the downstream working line port (8, 9) of the hydraulic motor (7) is separated from the second accumulator (41).

**7.** Method according to claim 6, **characterized in that**
the downstream working line port (8, 9) of the hydraulic motor (7) is coupled to the first accumulator (40) to store pressure energy, and the upstream working line port (9, 8) of the hydraulic motor (7) is coupled to the second accumulator (41).

**8.** Method according to claim 7, **characterized in that**
storing of pressure energy is started by activating a brake device (96), and by activation of the brake device (96) the hydraulic motor (7) and also the hydraulic pump (3) are pivoted to a smaller displacement (Vm) or a smaller delivery volume ($V_p$) at a constant transmission ratio first.

**9.** Method according to one of the claims 6 to 8, **characterized in that**
upon activation the brake device (96), conveyor sides of the hydraulic pump (3) and the second accumulator (41) are coupled to the upstream working line port (8, 9), and that upon activation of the brake device a suction side of the hydraulic pump (3) and the first accumulator (4 0) are coupled to a downstream working line port (9, 8) of the hydraulic motor (7).

**10.** Method according to claim 9, **characterized in that**
during the storing operation the hydraulic pump (3) is set to a delivery volume ($V_p$) which is not zero.

**11.** Method according to one of the claims 6 to 10, **characterized in that**
when storing energy in the first accumulator ((40) the displacement (Vm) of the hydraulic motor (7) is set to a value depending on the brake signal of the brake device (69) and the effective pressure difference value.

**12.** Method according to one of the claims 1 to 11, **characterized in that**,
at deceleration and before a driven shaft (10) of the hydraulic motor (7) comes to stop, the downstream working line port (8, 9) of the hydraulic motor (7) is separated from the first accumulator (40), and the upstream working line port (9, 8) of the hydraulic motor (7) is separated from the second accumulator (41), and that the delivery volume ($V_p$) of the hydraulic pump (3) is set to zero.

**13.** Method according to one of the claims 1 to 12, **characterized in that**
a first accumulator (40) is coupled to the suction side of the hydraulic pump (3) to start a combustion engine coupled to the hydraulic pump (3).

**14.** Method according to one of the claims 1 to 13, **characterized in that**
the hydraulic pump (3) is driven by a drive motor (2) to store pressure energy in the first accumulator, and that the conveyor side of the hydraulic pump (2) is coupled to the first accumulator (40).

**Revendications**

**1.** Procédé pour commander un entraînement hydrostatique (1, 1', 1") avec une pompe hydraulique (3) et un moteur hydraulique (7), un premier et un deuxième accumulateur hydraulique (40, 41) pour emmagasiner et récupérer de l'énergie, avec les étapes de procédé suivantes :

- emmagasiner de l'énergie de pression dans le premier accumulateur (40),
- relier le premier accumulateur (40) à un côté d'admission de la pompe hydraulique (3) pour récupérer l'énergie de pression emmagasinée dans le premier accumulateur (40),
- relier un branchement de conduite de travail (8, 9) aval du moteur hydraulique (7) au deuxième accumulateur (41), et
- séparer le branchement de conduite de travail (9, 8) aval du moteur hydraulique (7) du côté d'admission de la pompe hydraulique (3),

**caractérisé en ce que**,
pour empêcher le passage d'un moteur d'entraînement (2) de la pompe hydraulique (3) dans un régime de décélération, l'angle de rotation du moteur hydraulique (7) est choisi pendant la récupération de l'énergie de pression comme étant légèrement plus petit qu'un angle de rotation, qui résulte d'un moment de rotation ($M_{FZ-gefordert}$) demandé par le moteur hydraulique (7) et d'une différence de pression ($p_{SpHigh}$ - $p_{SpLow}$) entre le premier accumulateur (40) et le deuxième accumulateur (41) via la relation $2\Pi.(M_{FZ\_gefordert})/[(p_{SpHigh}$ - $p_{SpLow}).\eta_{hm,M}]$, $\eta_{hm,M}$ étant le rendement hydromécanique du moteur hydraulique (7) et dans lequel pendant la récupération de l'énergie de pression un moment de rotation d'entraînement est ainsi appliqué à la pompe hydraulique (3) via le moteur d'entraînement (2).

**2.** Procédé selon la revendication 1,
   **caractérisé en ce que**
   le branchement (8, 9) aval du moteur hydraulique (7) est tout d'abord séparé du côté d'admission de la pompe hydraulique (3) et, après un intervalle de temps déterminé, le premier accumulateur (40) est relié au côté d'admission de la pompe hydraulique (3).

**3.** Procédé selon la revendication 1 ou 2,
   **caractérisé en ce que**,
   pendant la récupération d'énergie, le moteur hydraulique (7) est ajusté à un volume de déplacement ou cylindrée ($V_m$), lequel est déterminé sur la base d'une valeur calculée de pré-contrôle ($M_{schätz}$) pour un moment de moteur hydraulique.

**4.** Procédé selon la revendication 3,
   **caractérisé en ce que**
   la valeur de pré-contrôle ($M_{schätz}$) est corrigée en tenant compte d'une grandeur effective mesurée.

**5.** Procédé selon la revendication 3 ou 4,
   **caractérisé en ce que**
   la valeur de pré-contrôle ($M_{schätz}$) est déterminée à partir d'une différence entre une vitesse de consigne de véhicule ($V_{soll}$) et une vitesse effective de véhicule ($V_{ist}$).

**6.** Procédé selon l'une des revendications 1 à 5,
   **caractérisé en ce que**,
   à la fin d'une récupération d'énergie emmagasinée du premier accumulateur (40), le premier accumulateur (40) est tout d'abord séparé du côté d'admission de la pompe hydraulique (3) et, après un deuxième intervalle de temps déterminé, le branchement de travail (8, 9) aval du moteur hydraulique (7) est relié avec le côté d'admission, avant que le branchement de travail (8, 9) aval du moteur hydraulique (7) ne soit séparé du deuxième accumulateur (41).

**7.** Procédé selon la revendication 6,
   **caractérisé en ce que**
   pour emmagasiner de l'énergie de pression le branchement de travail (8, 9) aval du moteur hydraulique (7) est relié au premier accumulateur (40) et le branchement de travail (9, 8) amont du moteur hydraulique (7) est relié au deuxième accumulateur (41).

**8.** Procédé selon la revendication 7,
   **caractérisé en ce que**
   l'accumulation d'énergie de pression est initiée par l'actionnement d'un dispositif de freinage (96) et lors de l'actionnement d'un dispositif de freinage (96) le moteur hydraulique (7) ainsi que la pompe hydraulique (3) sont tout d'abord amenés par rotation à un volume de déplacement ($V_m$) plus faible ou un volume de refoulement ($V_p$) plus faible à rapport de transmission constant.

**9.** Procédé selon l'une des revendications 6 à 8,
   **caractérisé en ce que**
   lors de l'actionnement du dispositif de freinage (96) un côté de refoulement de la pompe hydraulique (3) et le deuxième accumulateur (41) est relié au branchement de conduite de travail (8, 9) amont et **en ce que** lors de l'actionnement du dispositif de freinage un côté d'admission de la pompe hydraulique (3) et le premier accumulateur (40) est relié à un branchement de travail (9, 8) aval du moteur hydraulique (7).

**10.** Procédé selon la revendication 9,
   **caractérisé en ce que**

pendant un processus d'accumulation la pompe hydraulique (3) est ajustée à un volume de refoulement ($V_p$) différent de zéro.

11. Procédé selon l'une des revendications 6 à 10,
    **caractérisé en ce que**,
    pendant l'accumulation d'énergie dans le premier accumulateur (40), le volume de déplacement ($V_m$) du moteur hydraulique (7) est ajusté à une valeur qui dépend d'un signal de freinage du dispositif de freinage (96) et d'une valeur de différence de pression effective.

12. Procédé selon l'une des revendications 1 à 11,
    **caractérisé en ce que**,
    lors du freinage et avant d'atteindre l'arrêt d'un arbre de transmission (10) du moteur hydraulique (7), le branchement (8, 9) aval du moteur hydraulique (7) est séparé du premier accumulateur (40) et le branchement de conduite de travail (9, 8) amont du moteur hydraulique (7) est séparé du deuxième accumulateur (41), et **en ce que** le volume de refoulement ($V_p$) de la pompe hydraulique (3) est réglé sur zéro.

13. Procédé selon l'une des revendications 1 à 12,
    **caractérisé en ce que**
    pour le démarrage d'une machine à combustion reliée à la pompe hydraulique (3) le premier accumulateur (40) est relié au côté d'admission de la pompe hydraulique (3)

14. Procédé selon l'une des revendications 1 à 13,
    **caractérisé en ce que**
    pour l'accumulation d'énergie de pression dans le premier accumulateur (40) la pompe hydraulique (3) est entraînée par un moteur d'entraînement (2) et le côté de refoulement de la pompe hydraulique (3) est relié au premier accumulateur (40).

EP 1 963 687 B1

Fig. 1

Fig. 2

EP 1 963 687 B1

Fig. 3

Fig. 4

**EP 1 963 687 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2949337
- AT 395960 B